# EUROPEAN PATENT APPLICATION

(11) **EP 2 413 449 A2**
(43) Date of publication of application: **01.02.2012**
(21) Application number: 10014376.7
(22) Date of filing: 08.11.2010
(51) Int. Cl.: H02J 1/00, H02J 3/00, F24F 5/00

(54) **Air conditioning system**

(30) Priority: 30.07.2010 JP 2010171517; 30.07.2010 JP 2010171966; 30.07.2010 JP 2010171266
(71) Applicant: Sanyo Electric Co., Ltd., Osaka 570-8677 (JP)
(72) Inventor: Motegi, Tomio, Moriguchi-shi Osaka 570-8677 (JP)
(74) Representative: Glawe, Delfs, Moll

(57) **Abstract**

In an air conditioning system (100), a controller (3) enables circuits conducting output of a generator (13) and the direct-current power generating unit (12) to the charger (19) and an output circuit converting direct-current power of the battery (18) into alternating-current power and superimposing the resultant power on wiring if the power supplied to loads detected by a detector is equal to or smaller than the sum of the output of the generator (13) and direct-current power generating unit (12), and enables an output circuit converting direct-current power from the generator (13) into alternating-current power and superimposing the resultant power on the wiring and an output circuit converting direct-current power of the direct-current power generating unit (12) into alternating-current power and superimposing the resultant power on the wiring if the detected power exceeds the sum of the output of the generator (13) and direct-current power generating unit (12).

## Description

### TECHNICAL FIELD

The present invention relates to an air conditioning system including a refrigerating cycle using a compressor, condenser, decompressor, and evaporator and a generator driven by a driving source driving the compressor.

### BACKGROUND ART

Known systems for supplying power charged in batteries to home electric appliances and other loads during peak hours with large power consumption are designed to predict the amount of power required for the next day, determine the charge levels of the batteries based on the predicted amount of power, and charge the batteries in advance (for example, refer to JP-A-4-200245).

Large-scale factories that consume a large amount of energy are equipped with a known cogeneration system. The system includes a gas heat pump (GHP) for driving a compressor with a gas engine whose surplus energy is used for power generation and whose exhaust heat is leveraged in pursuit of energy conservation (refer to JP-A-2007-040593).

For air conditioning in a large space, a known system includes a plurality of air conditioners each having interior and exterior units (refer to JP-A-9-229419). In addition, another air conditioner using a variable rotational speed compressor, namely, an inverter compressor, is widely known (refer to JP-A-5-322331). In particular, when a plurality of air conditioners each having an inverter compressor are equipped in a single, large space, the outputs of the compressors in the individual air conditioners are variably controlled in accordance with the room temperature of the air-conditioned space. As a result, the operational load is distributed among the air conditioners to provide a nearly even load.

The power charged in batteries is in surplus if the amount of power actually required is smaller than a predicted amount, and the power charged in batteries is in short supply if the power actually required is larger than the predicted amount. There is a limit, however, in accurately predicting the amount of power to be required, making it difficult to use up the exact amount of power charged in batteries.

Such a cogeneration system as disclosed in JP-A-2007-040593 is required to further employ commercial power sources, direct-current power generating units outputting direct-current power, such as photovoltaic power generating units, and batteries in combination to acquire power to be charged in the batteries from the generator, direct-current power generating units, or commercial power sources on an optional basis, and to select whether the power generated by the generator and direct-current power generating units is supplied to loads or charged in the batteries based on the amount of power consumed by the loads. In this manner, the cogeneration system is intended for efficient use of the power charged in the batteries, thereby cutting the consumption of power supplied from the commercial power sources.

In general, the operational efficiency of an inverter compressor increases as its rotational speed approaches its rated value. On the other hand, lower rotational speeds decrease operational efficiency. For example, operation at 30% or less of the rated rotational speed leads to a significant reduction in efficiency. Therefore, in such a configuration as disclosed in JP-A-5-322331 with a plurality of air conditioners each having an inverter compressor, if the operational load is distributed among the air conditioners to provide a nearly even load, the rotational speed of each air conditioner may drop uniformly, resulting in a reduction in operational efficiency.

### SUMMARY

An advantage of some aspects of the present invention is to provide an air conditioning system that acquires power to be charged in batteries from a generator, direct-current power generating unit, and commercial power sources and selects whether the power generated by the generator and direct-current power generating units is supplied to loads or charged in the batteries based on the amount of power consumed by the loads, so that the power charged in the batteries can be supplied without any surplus or deficiency and the charged power can be used efficiently.

Another advantage of some aspects of the invention is to provide an air conditioning system that employs a cogeneration system, commercial power sources, direct-current power generating units outputting direct-current power, such as photovoltaic power generating units, and batteries in combination to efficiently use the power charged in the batteries so as to cut the consumption of power supplied from the commercial power system and that prevents a compressor included in each air conditioner from operating under low operational efficiency conditions so as to perform efficient air conditioning.

According to a first aspect of the invention, an air conditioning system includes: a refrigerating cycle using a compressor, condenser, decompressor, and evaporator; a generator driven by a driving source driving the compressor; wiring to which commercial power is supplied from a commercial power system connected thereto; a battery; a charger controlling charging of the battery; a first output circuit converting direct-current power of the battery into alternating-current power and superimposing the resultant power on the wiring; a circuit conducting power generated by the generator to the charger; a second output circuit converting direct-current power sourced from the power generated by the generator into alternating-current power and superimposing the resultant power on the wiring; a direct-current power generating unit outputting direct-current power; a third output circuit converting direct-current power of the direct-current power generating unit into alternating-current power and superimposing the resultant power on the wiring; a circuit conducting output of the direct-current power generating unit to the charger; a load supplied with power via the wiring; a detector detecting the power supplied to the load; and a controller; the controller enabling the circuits conducting the power generated by the generator and the output of the direct-current power generating unit to the charger and the first output circuit converting the direct-current power of the battery into alternating-current power and superimposing the resultant power on the wiring if the power detected by the detector is equal to or smaller than the sum of the power generated by the generator and the output of the direct-current power generating unit, and the controller enabling the second output circuit converting the direct-current power sourced from the power generated by the generator into alternating-current power and superimposing the resultant power on the wiring and the third output circuit converting the direct-current power of the direct-current power generating unit into alternating-current power and superimposing the resultant power on the wiring if the power detected by the detector exceeds the sum of the power generated by the generator and the output of the direct-current power generating unit.

According to a second aspect of the invention, in the air conditioning system according to the first aspect, the controller enables the first output circuit converting the direct-current power of the battery into alternating-current power and superimposing the resultant power on the wiring if the power detected by the detector exceeds the sum of the power generated by the generator and the output of the direct-current power generating unit and remaining capacity of the battery is equal to or exceeds a certain value.

According to a third aspect of the invention, the air conditioning system according to the first aspect also includes a circuit conducting the power supplied from the commercial power system to the charger, in which the controller enables the circuit conducting the power supplied from the commercial power system to the charger during night-time hours.

According to a fourth aspect of the invention, in the air conditioning system according to the first aspect, the driving source is a gas engine.

According to a fifth aspect of the invention, in the air conditioning system according to the first aspect, the battery is charged up to about 95% of a full charge thereof.

According to a sixth aspect of the invention, in the air conditioning system according to the first aspect, the controller determines the ratio of the power supplied from the battery with respect to power consumed by the load before and after peak operation hours of the load and controls the power supplied from the battery based on the ratio thus determined.

According to a seventh aspect of the invention, in the air conditioning system according to the sixth aspect, the controller determines the ratio of the power supplied from the battery with respect to the power consumed by the load before and after the peak operation hours of the load based on remaining capacity of the battery.

According to an eighth aspect of the invention, in the air conditioning system according to the sixth or seventh aspect, the controller determines the ratios of the power generated by the generator, the power generated by the direct-current power generating unit, and the power supplied from the battery with respect to the power consumed by the load and controls the power supplied from the battery based on the ratios thus determined and an amount of the power generated by the generator and the direct-current power generating unit.

According to a ninth aspect of the invention, in the air conditioning system according to the eighth aspect, the controller predicts the power generated by the generator, the power generated by the direct-current power generating unit, and the power consumed by the load and determines the ratios of the power generated by the generator, the power generated by the direct-current power generating unit, and the power supplied from the battery to the power consumed by the load based on the prediction.

According to a tenth aspect of the invention, in the air conditioning system according to the ninth aspect, the controller predicts the power generated by the generator, the power generated by the direct-current power generating unit, and the power consumed by the load based on the history of power generated by the generator, the history of power generated by the direct-current power generating unit, and the history of power consumed by the load.

According to an eleventh aspect of the invention, in the air conditioning system according to the tenth aspect, the controller predicts the power generated by the generator, the power generated by the direct-current power generating unit, and the power consumed by the load based on the history of weather information.

According to a twelfth aspect of the invention, an air conditioning system includes: a refrigerating cycle using a compressor, condenser, decompressor, and evaporator; a generator driven by a driving source driving the compressor; wiring to which commercial power is supplied from a commercial power system connected thereto; a battery; a charger controlling charging of the battery; a first output circuit converting direct-current power of the battery into alternating-current power and superimposing the resultant power on the wiring; a circuit conducting power generated by the generator to the charger; a second output circuit converting direct-current power sourced from the power generated by the generator into alternating-current power and superimposing the resultant power on the wiring; a direct-current power generating unit outputting direct-current power; a third output circuit converting direct-current power of the direct-current power generating unit into alternating-current power and superimposing the resultant power on the wiring; a circuit conducting output of the direct-current power generating unit to the charger; a load supplied with power via the wiring; a detector detecting the power supplied to the load; and a controller; the load including a plurality of air conditioners each implemented by a refrigerating cycle including a compressor driven by alternating-current power supplied via the wiring, condenser, decompressor, and evaporator, the controller enabling the circuits conducting the power generated by the generator and the output of the direct-current power generating unit to the charger and a circuit conducting the power of the battery to the first output circuit if the power detected by the detector is equal to or smaller than the sum of the power generated by the generator and the output of the direct-current power generating unit, the controller enabling a circuit conducting the power generated by the generator to the second output circuit and a circuit conducting the output of the direct-current power generating unit to the third output circuit if the power detected by the detector exceeds the sum of the power generated by the generator and the output of the direct-current power generating unit, and if power consumed by the compressor included in any of the air conditioners is smaller than a certain value, the controller stopping operation of the compressor in the air conditioner, while maintaining operation of a fan blowing air to an air-conditioned chamber arranged in the corresponding refrigerating cycle of the air conditioner.

According to a thirteenth aspect of the invention, in the air conditioning system according to the twelfth aspect, if a state in which power consumed by the compressor included in any of the air conditioners is smaller than the certain value continues for more than a certain period, the controller stops operation of the compressor in the corresponding air conditioner.

According to a fourteenth aspect of the invention, in the air conditioning system according to the twelfth aspect, the load includes the plurality of air conditioners, and fans blowing air to the air-conditioned chamber arranged in the refrigerating cycle of each of the air conditioners are disposed in such single air-conditioned chamber, and if power consumed by the compressor included in any of the air conditioners is smaller than the certain value, the controller stops operation of the compressor in the air conditioner whose power consumption is smaller than the certain value, while maintaining operation of the fans arranged in the refrigerating cycle of the corresponding air conditioner.

According to a fifteenth aspect of the invention, in the air conditioning system according to the fourteenth aspect, if a state in which power consumed by the compressor included in any of the air conditioners is smaller than the certain value continues for more than a certain period, the controller stops operation of the compressor in the corresponding air conditioner.

According to a sixteenth aspect of the invention, in the air conditioning system according to the fourteenth aspect, if a state in which power consumed by the compressor included in any of the air conditioners exceeds a high-load operation value continues, the controller stops operation of the compressor in the corresponding air conditioner, while maintaining operation of all the fans arranged in the refrigerating cycle of the corresponding air conditioner, and starts the compressors included in other air conditioners whose operation has been stopped.

According to a seventeenth aspect of the invention, in the air conditioning system according to any one of the fourteenth to sixteenth aspects, the controller selects and starts a compressor whose cumulative drive time is short among the compressors included in the air conditioners whose operation has been stopped.

According to an eighteenth aspect of the invention, in the air conditioning system according to the thirteenth aspect, the controller stops operation of part of the compressors included in the plurality of air conditioners, while maintaining operation of all the fans, if the circuit conducting the power generated by the generator to the second output circuit and the circuit conducting the output of the direct-current power generating unit to the third output circuit are enabled and the power consumed by the load exceeds a set value, and the controller changes the compressor to be stopped if the state in which the power consumed by the load exceeds the set value is still continuing.

According to the first aspect of the invention, the air conditioning system employs a cogeneration system including: a refrigerating cycle using a compressor, condenser, decompressor, and evaporator; and a generator driven by a driving source driving the compressor. The refrigerating cycle using a compressor, condenser, decomposer, and evaporator is usually provided with cooling pipes connected to an interior unit of the air conditioner to control air conditioning of an air-conditioned chamber.

According to the first aspect of the invention, in addition to the refrigerating cycle using a compressor, condenser, decomposer, and evaporator and the generator driven by a driving source driving the compressor, the air conditioning system includes the direct-current power generating unit such as a photovoltaic power generating unit and the battery. Power generated by the generator and the direct-current power generating unit such as a photovoltaic power generating unit is charged in the battery, and the power charged in the battery is supplied to the load during time periods in which power consumed by the load is large.

In the air conditioning system according to the first aspect of the invention, the direct-current power generated by the generator and the direct-current power generated by the direct-current power generating unit such as a photovoltaic power generating unit are charged in the battery, converted into alternating-current power, and supplied to the load when the power supplied to the load is small. Therefore, alternating-current power supplied from the commercial power system can be suppressed to conserve energy.

In the air conditioning system according to the first aspect of the invention, when the power consumed by the load is large, the direct-current power generated by the generator and the direct-current power generated by the direct-current power generating unit such as a photovoltaic power generating unit are converted into alternating-current power and directly supplied to the load. Therefore, power supplied from the commercial power system can be further suppressed to conserve energy.

In the air conditioning system according to the second aspect of the invention, when the power consumed by the load is large, not only the power generated by the generator and the direct-current power generating unit but also the power charged in the battery is supplied to the load. Therefore, power supplied from the commercial power system can be further suppressed to conserve energy. Discharging of 100% or more when using the battery causes malfunctions or shortened lifetime of the battery. The air conditioning system of some aspects of the invention prevents malfunctions and shortened lifetime of the battery by enabling the first output circuit converting the direct-current power of the battery into alternating-current power and superimposing the resultant power on the wiring when the remaining level of the battery is equal to or more than a certain value, whereby the power charged in the battery is supplied to the load. Although the certain remaining level of the battery varies depending on the kind of the battery, it can be optionally set from about 10% to 20% of full charge for a lithium ion secondary cell.

Electricity rates for midnight power service are set low in the commercial power system. With the air conditioning system according to the third aspect of the invention, the battery is charged with power supplied from the commercial power system during a night-time period. Therefore, power supplied from the commercial power system can be further suppressed to conserve energy.

The refrigerating cycle using a compressor, condenser, decompressor, and evaporator has good thermal efficiency, and the gas engine does not need to be driven at maximum power all the time for driving the compressor, and therefore, surplus power can be used for driving the generator. With the air conditioning system according to the fourth aspect of the invention, the power supplied from the commercial power system can be suppressed to conserve energy. Moreover, the gas engine hardly generates sulfur oxides, and its emissions of carbon dioxides and nitrogen oxides are also low, which provides an environmentally friendly air conditioning system.

Leaving the battery in a fully charged state or excess charge shortens the lifetime of the battery. In the air conditioning system according to the fifth aspect of the invention, the battery is charged up to about 95% of its fully charged level. Therefore, the lifetime of the battery is extended, providing economic benefits.

According to the sixth aspect of the invention, the air conditioning system minutely controls the power to be discharged from the battery depending on the actual power consumption of the load before and after a peak operation period of the load. The power charged in the battery can be used up without shortage or wastefulness. Therefore, the power charged in the battery can be used efficiently all day long. Moreover, power supplied from the commercial power system is cut during peak periods by effectively using the power charged in the battery.

According to the seventh aspect of the invention, the air conditioning system controls the discharging of the battery considering not only the power consumed by the load but also the remaining level of the battery in order to use up the power charged in the battery without any surplus or deficiency. Therefore, the power charged in the battery can be efficiently used all day long.

With the air conditioning system according to the eighth aspect of the invention, the power supplied from the generator and direct-current power generating unit is preferentially used, thereby enhancing energy conservation. Therefore, the power charged in the battery can be used effectively all day long.

With the air conditioning system according to the ninth aspect of the invention, the discharge amount of the battery can be suppressed to supply power from the battery during the whole peak operation period of the load, for example, on a day when power consumed by the load is large and power generated by the generator and direct-current power generating unit is small. The power charged in the battery is thus efficiently used to cut power supplied from the commercial power system during peak periods.

With the air conditioning system according to the tenth aspect of the invention, power to be generated by the generator and direct-current power generating unit and power to be consumed by the load for the day are predicted based on the amount of power generated by the generator and direct-current power generating unit and the amount of power consumed by the load for the previous three days. The amount of power to be discharged from the battery is controlled based on the predicted value to efficiently use the power charged in the battery. Therefore, power supplied from the commercial power system can be cut during peak periods.

With the air conditioning system according to the eleventh aspect of the invention, the amount of power generated by the generator and direct-current power generating unit and the amount of power consumed by the load are predicted more accurately based on statistics of a history of power generated by the generator and direct-current power generating unit and weather information for that day. The amount of power to be discharged from the battery is controlled based on the predicted value to efficiently use the power charged in the battery. Therefore, power supplied from the commercial power system can be cut during peak periods.

According to the twelfth aspect of the invention, the air conditioning system employs a cogeneration system including a refrigerating cycle using a compressor, condenser, decompressor, and evaporator; and a generator driven by a driving source driving the compressor. The refrigerating cycle operates air conditioning and also provides a plurality of air conditioners.

In other words, the air conditioning system according to the twelfth aspect of the invention includes the cogeneration system including a heat pump system and the generator, the direct-current power generating unit such as a photovoltaic power generating unit, and the air conditioners employing the refrigerating cycle using a compressor, condenser, decompressor, and evaporator. The power generated by the cogeneration system, for example, is charged in the battery, and the power charged in the battery is supplied to the air conditioners during peak periods with large power consumption.

With the air conditioning system according to the twelfth aspect of the invention, when the power supplied to the load is small, the power generated by the generator in the cogeneration system and the power generated by the direct-current power generating unit such as a photovoltaic power generating unit are charged in the battery and supplied to the load. Therefore, power supplied from the commercial power system can be suppressed to conserve energy.

With the air conditioning system according to the twelfth aspect of the invention, when power consumed by the load is large, the power generated by the generator in the cogeneration system and the power generated by the direct-current power generating unit such as a photovoltaic power generating unit are directly supplied to the load. Moreover, the power charged in the battery is supplied to the load as needed. Accordingly, usage efficiency of the battery is enhanced, and power supplied from the commercial power system can be further suppressed to conserve energy. In addition, the battery can be used efficiently all day long.

Also according to the twelfth aspect of the invention, the air conditioning system includes the plurality of air conditioners that are driven by alternating-current power supplied via the wiring besides the air conditioning operated by the refrigerating cycle. The operation of the compressor in each air conditioner is stopped, while operation of the fan blowing air to the air-conditioned chamber arranged in the corresponding refrigerating cycle of the air conditioners is maintained, if power consumed by the compressor included in any of the air conditioners is smaller than a certain value. Therefore, with the air conditioning system according to the twelfth aspect of the invention, operation of the compressor in the air conditioner operating with poor operational efficiency and small power consumption is stopped, whereby power supplied from the commercial power system can be further suppressed to conserve energy. Furthermore, because operation of the compressor is stopped while operation of the fan blowing air to the air-conditioned chamber arranged in the corresponding refrigerating cycle of one air conditioner is maintained, blowing air to the air-conditioned chamber is maintained while the compressor is not in operation. Therefore, uneven temperature distribution in the air-conditioned chamber can be mitigated even when the compressor is stopped.

The fans blowing air to the air-conditioned chamber arranged in the refrigerating cycle of one air conditioner in the air conditioning system according to the twelfth aspect of the invention are typically arranged in an interior unit of the air conditioner. The number of such interior unit(s) provided can be one or more.

The power consumed by the compressor included in any of the air conditioners changes with time and can become smaller or larger than the certain value in a short period of time. With the air conditioning system according to the thirteenth aspect of the invention, if a state in which power consumed by the compressor included in any of the air conditioners is smaller than the certain value continues for more than a certain period, the operation of the compressor in the corresponding air conditioner is stopped. In other words, the operation of the compressor included in any of the air conditioners is not started or stopped repeatedly in a short period of time. The certain period is not limited, but appropriately set between a few tens of minutes to an hour.

With the air conditioning system according to the fourteenth aspect of the invention, if power consumed by the compressor included in any of the air conditioners is smaller than the certain value, the operation of the compressor in the air conditioner is stopped, while the operation of the fans blowing air to the air-conditioned chamber arranged in the refrigerating cycle of the corresponding air conditioner is maintained. In the air conditioning system according to the fourteenth aspect of the invention, therefore, the compressor in the air conditioner operating with poor operational efficiency and small power consumption is stopped, and the compressors of the other air conditioners operate with increased operational efficiency with larger power consumption to achieve a required air conditioning state. Therefore, power supplied from the commercial power system can be further suppressed to conserve energy.

In this case as well, the fans blowing air to the air-conditioned chamber arranged in the corresponding refrigerating cycle of one air conditioner are typically arranged in an interior unit of the air conditioner. The number of such interior unit(s) provided can be one or more.

With the air conditioning system according to the fifteenth aspect of the invention, operation or stopping of the compressor included in any of the air conditioners is not repeated in a short period of time.

If the compressor in any of air conditioners continues operating in a high-load operation state for a long period of time, its lifetime will be adversely affected. With the air conditioning system according to the sixteenth aspect of the invention, if a state in which power consumed by the compressor included in any of the air conditioners exceeds a high-load operation value continues, operation of the compressor in the corresponding air conditioner is stopped, and the compressors in the other air conditioners whose operation has been stopped are started. Therefore, the operation time in a high-load operation state of the compressors in the air conditioners is averaged, which prevents the lifetime of the compressor in any specific air conditioner from being reduced.

With the air conditioning system according to the seventeenth aspect of the invention, if a state in which power consumed by the compressor included in any of the air conditioners exceeds a high-load operation value continues, operation of the compressor in the corresponding air conditioner is stopped. A compressor whose accumulative driving time is short in comparison with the other compressors included in the air conditioners whose operation has been stopped is selected and started. Therefore, the operation time in a high-load operation state of the compressors in the air conditioners is averaged in a more reliable manner, which further prevents reduction of the lifetime of the compressor in any specific air conditioner.

With the air conditioning system according to the eighteenth aspect of the invention, if the second output circuit converting direct-current power sourced from the power generated by the generator into alternating-current power and superimposing the resultant power on the wiring and the third output circuit converting direct-current power of the direct-current power generating unit into alternating-current power and superimposing the resultant power on the wiring are enabled, power consumption exceeds the sum of the power generated by the generator and the output of the direct current power generating unit. For example, air conditioners equipped in stores consume a large amount of power. Power consumption is reduced if operation of part of the compressors included in the plurality of air conditioners is stopped while operation of all of the fans is maintained when power consumed by the load exceeds the set value. With the air conditioning system according to the eighteenth aspect of the invention, if the state in which the power consumed by the load exceeds the set value is still continuing, there is a low reduction in power consumed by the air conditioners whose operation has been stopped. Sequentially switching the compressor to be stopped can make the power consumed by the load when the compressor included in corresponding air conditioner whose power consumption is large smaller than the set value. In this case, the number of air conditioners to be stopped may be changed to make the power consumed by the load smaller than the set value.

### BRIEF DESCRIPTION OF THE DRAWINGS

The invention will be described with reference to the accompanying drawings, wherein like numbers reference like elements.
Fig. 1 is a circuit diagram illustrating an air conditioning system according to an embodiment of the invention.
Fig. 2 is a diagram illustrating a cooling circuit for a gas engine.
Fig. 3 is a flowchart of power control performed by a system controller according to another embodiment of the invention.
Fig. 4 is a flowchart of the procedure for setting a direct-current power output ratio.
Fig. 5 is a flowchart of the procedure for calculating the amount of power supply.
Fig. 6 is a chart illustrating an example of an operational state of a compressor.
Fig. 7 is a configuration diagram of an air conditioning system according to still another embodiment of the invention.
Fig. 8 is a schematic configuration diagram of a plurality of air conditioners.
Fig. 9 is a schematic configuration diagram of a single air conditioner.
Fig. 10 is a block diagram illustrating the configuration of a compressor and electrical container included in an exterior unit.
Fig. 11 is a flowchart of operational control for a photovoltaic power generating unit.
Fig. 12 is a flowchart of charge-discharge control for a battery.
Fig. 13 is a flowchart of operational control for a variable rotational speed compressor.
Fig. 14 is a chart illustrating an example of an operational state of the variable rotational speed compressor.
Fig. 15 is a chart illustrating an example of an operational state of the variable rotational speed compressor.
Fig. 16 is a chart illustrating an example of an operational state of the variable rotational speed compressor.
Fig. 17 is a chart illustrating an example of an operational state of the variable rotational speed compressor.

### DESCRIPTION OF EXEMPLARY EMBODIMENTS

Embodiments of the invention will now be described in detail with reference to the accompanying drawings. It should be understood however that the embodiments below are intended by way of examples of air conditioning systems to embody the technical idea of the invention, not by way of limiting the invention to these particular air conditioning systems. The invention is equally applicable to other embodiments that fall within the scope of the appended claims.

### First Embodiment

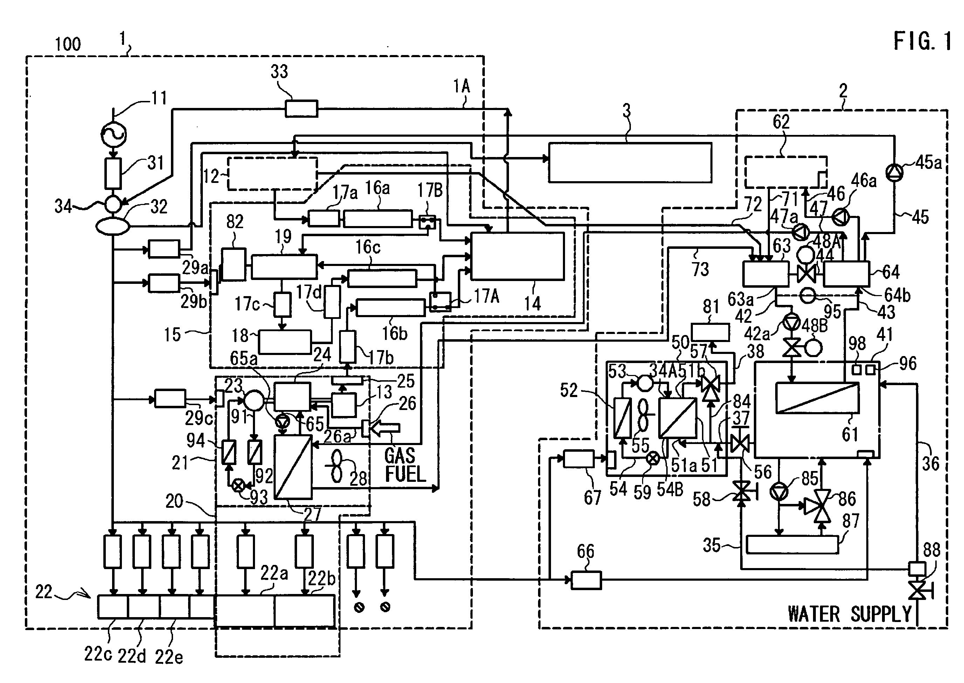

An air conditioning system 100 according to a first embodiment of the invention includes, as illustrated in Fig. 1, a power system 1, a hot-water system 2, and a system controller 3 monitoring and controlling the operational state of each component included in the air conditioning system 100.

The power system 1 includes a commercial power system 11 supplied from an electric utility and a plurality of external power generating units interconnected to the commercial power system 11. The external power generating units according to the present embodiment are composed of a photovoltaic power generating unit 12 as a direct-current power generating unit, a GHP generator 13 (hereinafter simply referred to as the generator 13), and a battery 18. The power system 1 also includes a power conditioning system (PCS, corresponding to an output circuit according to some aspects of the invention) 14 incorporating a system interconnection protector designed to convert direct-current power to alternating-current power and superimpose the resultant power on wiring. The photovoltaic power generating unit 12, the generator 13, and the battery 18 are interconnected to the commercial power system 11 via the PCS 14. The PCS 14 includes an inverter and breaker unit, converts direct-current power input from the systems interconnected thereto into alternating-current power, detects short-circuiting, excess current or voltage, or other system failures (malfunctions) in the systems interconnected thereto, and disconnects an external power generating unit or the like in which any failure is detected from the power system 1. The battery 18 and the PCS 14 are incorporated in a power inverter unit 15. It should be understood that known inverters or the like can be used as long as they can convert direct-current power into alternating-current power and superimpose the resultant power on the wiring.

The commercial power system 11 includes a main circuit breaker 31 and a detector 32 and is interconnected to the PCS 14 via these components. The commercial power system 11 distributes electric power to a system controller (corresponding to the controller according to some aspects of the invention) 3 via a breaker 29a, to the power inverter unit 15 via a breaker 29b, and to an exterior unit 21 of a gas heat pump air conditioner (hereinafter simply referred to as the air conditioner) 20 incorporating the generator 13 via a breaker 29c, thereby supplying power for driving the respective units. In addition, the detector 32 according to the present embodiment prevents reverse power flow, so that no current will flow from the systems toward an electric utility. The detector 32 also detects power supplied from the commercial power system 11 to air conditioning interior units 22a and 22b, lighting equipment 22c and 22d, and office automation equipment 22e, for example (hereinafter collectively referred to as loads 22).

The power inverter unit 15 includes magnetic switches 17a and 17b to which the photovoltaic power generating unit 12, the generator 13, or other external power generating units other than commercial power systems are connected. The magnetic switches 17a and 17b are controlled by the system controller 3 and designed to ensure mechanical insulation (fail-safe function) of the photovoltaic power generating unit 12, the generator 13, or other external power generating units in which any failure is detected by connecting or disconnecting such external power generating unit and the power system 1.

The magnetic switches 17a and 17b are connected with DC/DC converters 16a and 16b, respectively. Power generated by the photovoltaic power generating unit 12 and the generator 13 is branched into two channels. Specifically, the power is brought in one channel through the magnetic switches 17a and 17b to the DC/DC converters 16a and 16b, respectively, where the voltage of the power is boosted up to the operational power of the PCS 14, then input in the PCS 14, and further supplied to the individual loads. The power brought in another channel is conducted to the DC/DC converters 16a and 16b in the same manner, thereafter supplied to a later-described battery charger 19, and charged in the battery 18. The destinations are switched with switches provided at a branch point between the DC/DC converters 16a and 16b, the PCS 14, and the battery charger 19. Switching by means of these switches will be described later. The PCS 14 incorporates an inverter (not shown) converting the power generated by the photovoltaic power generating unit 12 or the generator 13 from direct current into single-phase three wire alternating current, which is the same as in the commercial power system 11, and the resultant current is supplied to a system line 1A.

In this configuration, the power inverter unit 15 incorporates the PCS14, the DC/DC converters 16a and 16b, and the magnetic switches 17a and 17b connected to the DC/DC converters 16a and 16b, respectively, and designed to have a fail-safe function. The magnetic switches 17a and 17b can be connected with general external power generating units, whereby the systems are interconnected in a simple manner to enhance energy conservation.

The power inverter unit 15 also incorporates an active filter 82, the battery charger 19, a magnetic switch 17c, and the battery 18. The battery 18 is connected to the battery charger 19 with the magnetic switch 17c interposed therebetween. The battery charger 19 is connected to the commercial power system 11 with the active filter 82 interposed therebetween. The active filter 82 includes a rectifier circuit and power factor regulator circuit. The battery 18 is charged with power supplied from the commercial power system 11 and power generated by the generator 13 and the photovoltaic power generating unit 12 via the battery charger 19.

For charging from the commercial power system 11, the battery charger 19 is controlled by the system controller 3. Specifically, a charging period is set in midnight or night-time hours (e.g., from 23:00 to 06:59), during which electricity rate is low based on a late-night power rate contract or hourly power rate contract. Power sourced from the commercial power system 11 is used for charging during this charging period, while power is discharged during daytime hours with large power consumption. Consequently, the consumption of power sourced from the commercial power system 11 is cut during peak hours, and electricity fees are saved accordingly. Connection between the battery charger 19 and the battery 18 and between the battery 18 and a DC/DC converter 16c is achieved with the magnetic switches 17c, 17d, respectively interposed therebetween, being controlled to open or be closed depending on the time, and power is supplied accordingly.

The magnetic switch 17d disconnects the battery 18 from the power system 1 if any failure occurs in the power system 1 to which power is supplied from the battery 18, thereby ensuring mechanical insulation between the battery 18 and the power system 1. The voltage of power input in the DC/DC converter 16c is boosted up to the operational power of the PCS 14. The power is then input in the PCS 14, converted from direct current into single-phase three-wire alternating current, which is the same as in the commercial power system 11, and the resultant current is supplied to the system line 1A.

The photovoltaic power generating unit 12 includes a solar panel (not shown) to which a plurality of photovoltaic cells converting incident solar energy directly into electric power are connected in a series-parallel arrangement. The power generated by the photovoltaic power generating unit 12 is input in the power inverter unit 15 and supplied to the battery 18 or the PCS 14. The output voltage of the solar panel will decline as it is heated by solar radiation to a high temperature. Therefore, a water-cooling radiator plate or water channel is provided to the back surface of the solar panel through which an antifreeze solution (brine) flows and circulates in the air conditioning system 100 to recover solar heat, thereby preventing an increase in the temperature of the solar panel and a decrease in the output of the photovoltaic power generating unit 12 in the present embodiment. The antifreeze solution according to the present embodiment means a liquid (cooling water) that does not freeze in winter even in cold-weather regions.

The generator 13 is provided to the exterior unit 21 of the air conditioner 20. The exterior unit 21 includes a gas engine 24 fueled with gas, a gas pipe 26a for supplying gas to the gas engine 24, and a gas supply inlet 26 to which the gas pipe 26a is connected. Gas fuel is supplied through the gas supply inlet 26 to the gas engine 24 via the gas pipe 26a, thereby driving the gas engine 24.

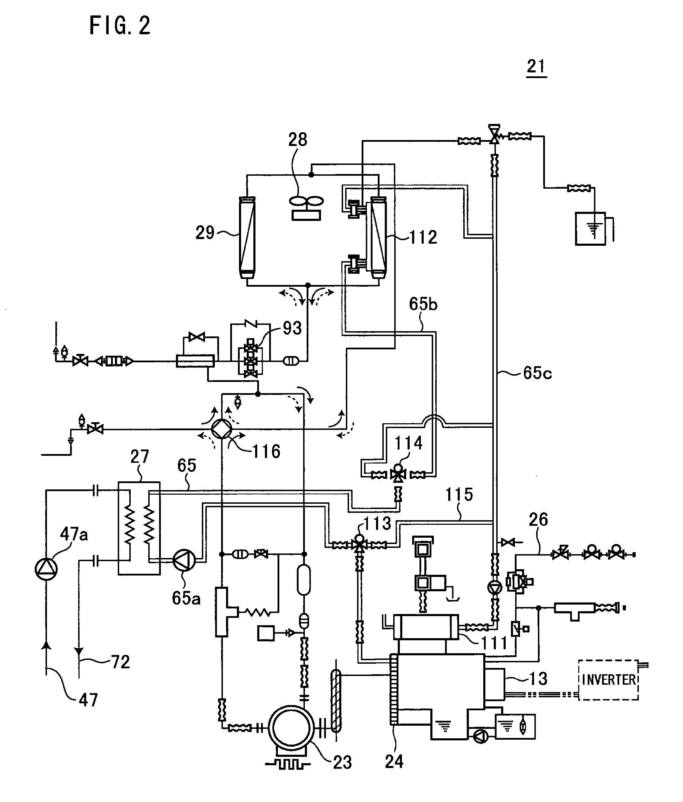

The air conditioner 20 includes a compressor 23 driven by the gas engine 24 as a driving source, a refrigerant pipe (not shown) for circulating a refrigerant compressed by the compressor 23, and at least one interior unit connected via the refrigerant pipe. The first embodiment illustrates an example including two interior units 22a and 22b represented by the loads 22 as at least one interior unit. The exterior unit 21 includes a condenser 92, a decompressor 93, an evaporator 94, and a four-way valve 116 (see Fig. 2), for example, all of which are connected to the compressor 23 via the refrigerant pipe 91. During operation of the exterior unit 21, the generator 13 is driven to generate power by using surplus energy of the gas engine 24. The power thus generated is converted from alternating current to direct current in a rectifier circuit 25, and the resultant power is input in the power inverter unit 15 and then supplied to the battery 18 or the PCS 14.

The air conditioning system 100 thus configured according to the first embodiment is a hybrid, energy-saving system that inputs power output from the photovoltaic power generating unit 12, the generator 13, and the battery 18 in the PCS 14 via the DC/DC converters 16a, 16b, and 16c, respectively, and converts the power into alternating-current power, and that is interconnected to the commercial power system 11. The system power thus interconnected passes through the system line 1A and is connected via a breaker 33 to an interconnection point 34 from which electric power is distributed to various types of equipment serving as the loads 22, such as the lighting equipment, office automation equipment, and air conditioning interior units 22a and 22b, via respective breakers.

A cooling circuit for the gas engine 24 will now be described. The gas engine 24 is a water-cooling type. Provided with a cooling-water circulating path 65 as illustrated in Fig. 2, the gas engine 24 is provided with an exhaust-gas heat exchanger 111 for cooling exhaust gas emitted from the gas engine and a water jacket of the gas engine 24. Engine cooling water passes through these components, thereby decreasing the temperature of exhaust gas and the engine body.

The cooling-water circulating path 65 is connected with a motor-operated three-way valve 113, a cooling-water pump 65a, and a driving-source heat exchanger 27. The cooling water, whose temperature has risen as it passes through the exhaust-gas heat exchanger 111 and the water jacket, then passes through the cooling-water circulating path 65 and is conducted via the motor-operated three-way valve 113 and the cooling-water pump 65a to the driving-source heat exchanger 27 where it exchanges heat with the antifreeze solution circulating in the air conditioning system 100. The antifreeze solution recovers exhaust gas from the gas engine 24 and exhaust heat from the water jacket.

Provided downstream of the driving-source heat exchanger 27 in the cooling-water circulating path 65 are a motor-operated three-way valve 114 and a radiator 112 that are connected via a cooling-water pipe 65b. The cooling water that has passed through the driving-source heat exchanger 27 passes through the cooling-water circulating path 65 and then via the motor-operated three-way valve 114 through the cooling-water pipe 65b and is conducted to the radiator 112. The heat of the cooling water passing through the radiator 112 is released by a fan 28 provided to the radiator 112, whereby the temperature of the cooling water is lowered down to a certain temperature. The cooling water that has passed through the radiator 112 then passes through a cooling-water return pipe 65c to return to the exhaust-gas heat exchanger 111 and the water jacket of the gas engine 24.

If the temperature of the cooling water that has passed through the exhaust-gas heat exchanger 111 and the water jacket of the gas engine 24 is equal to or below a certain temperature, the cooling water is not conducted to the cooling-water circulating path 65 and instead conducted via the motor-operated three-way valve 113 to a cooling-water bypass pipe 115 so as to return to the exhaust-gas heat exchanger 111 and the water jacket of the gas engine 24.

The system controller 3 included in the air conditioning system 100 according to the first embodiment will now be described. The system controller 3 stores the amounts of power generated by the generator 13 and the photovoltaic power generating unit 12, compares the respective amounts stored and the amount of power detected by the detector 32 to be consumed by the loads 22, and determines whether the power generated by the generator 13 and the photovoltaic power generating unit 12 is charged in the battery 18 via the battery charger 19 or supplied to the loads 22 via the PCS 14. This process is controlled by the switching of a first switch 17A provided between the generator 13 and the PCS 14, or a second switch 17B provided between the photovoltaic power generating unit 12 and the PCS 14.

More specifically, the system controller 3 controls switching of the first switch 17A to supply the power generated by the generator 13 to the battery charger 19 and switching of the second switch 17B to supply the power generated by the photovoltaic power generating unit 12 to the battery charger 19 if the power detected by the detector 32 is equal to or smaller than the power generation capacity of the generator 13, or the power generation capacity of the photovoltaic power generating unit 12, or the sum power generation capacity of the generator 13 and the photovoltaic power generating unit 12.

Power consumed by the loads 22 is small if the power supplied to the loads 22 is equal to or smaller than the power generation capacity of the generator 13 or the photovoltaic power generating unit 12. In this case, the power charged in the battery 18 is supplied to the loads 22 via the PCS 14, making it possible to eliminate the needs for sourcing power from the commercial power system 11 and thus to achieve energy conservation. In addition, supplying no power generated by the generator 13 or the photovoltaic power generating unit 12 to the loads 22 if power consumed by the loads 22 is small prevents supply of more power than needed to the loads 22. This prevents surplus power from flowing back to the commercial power system 11 resulting in power selling.

By contrast, power consumed by the loads 22 is large if the power detected by the detector 32 to be supplied to the loads 22 exceeds the sum of the power generation capacity of the generator 13 and the photovoltaic power generating unit 12. Simply charging the power to be consumed by the loads 22 in the battery 18 and supplying the power charged in the battery 18 to the loads 22 via the PCS 14 will cause a power shortage, leading to the purchasing of power supply from the commercial power system 11.

To address this, the first switch 17A is switched to supply the power generated by the generator 13 directly to the PCS 14 and the second switch 17B is switched to supply the power generated by the photovoltaic power generating unit 12 directly to the PCS 14 if power consumed by the loads 22 is large, whereby the power can be supplied to the loads 22 without going through the battery 18. In this case, the power supplied is the total power generated by the generator 13 and the photovoltaic power generating unit 12, and thus a large amount of power can be supplied. As a result, the use of power from the commercial power system 11 can be reduced.

Furthermore, this process can be controlled on either the generator 13 or the photovoltaic power generating unit 12. For example, the first switch 17A is switched to supply the power generated by the generator 13 to the PCS 14 and the second switch 17B is switched to supply the power generated by the photovoltaic power generating unit 12 to the battery charger 19 if the power detected by the detector 32 exceeds the sum of the power generation capacity of the generator 13 and the photovoltaic power generating unit 12.

By contrast, the first switch 17A is switched to supply the power generated by the generator 13 to the battery charger 19 and the second switch 17B is switched to supply the power generated by the photovoltaic power generating unit 12 to the PCS 14 if the power detected by the detector 32 is equal to or exceeds the sum of the power generation capacity of the generator 13 and the photovoltaic power generating unit 12.

In this manner, the power generated by one of the generator 13 and the photovoltaic power generating unit 12 is supplied to the loads 22 via the PCS 14 according to the amount of power detected by the detector 32 to be consumed by the loads 22, while the power generated by the other is charged in the battery 18 via the battery charger 19. In this case, power can be also supplied from the battery 18 if the power generated by one source is not sufficient, whereby power can be supplied without any surplus or deficiency according to the amount of power consumed by the loads 22.

The hot-water system 2 included in the air conditioning system will now be described with reference to Figs. 1 and 2. The hot-water system 2 is mainly composed of a hot-water tank 41 storing tap water and a water heater 50 equipped with a heat pump circuit (hereinafter referred to as a heat-pump water heater) heating the tap water supplied from the hot-water tank 41 with heat of a refrigerant. The water that has been heated in the water heater 50 to be hot water is supplied to a heat water outlet 81 through a heat-pump hot-water pipe 38. When a faucet (not shown) on the heat water outlet 81 is opened, the heat-pump water heater 50 is operated to supply hot water at a temperature set by a user with a remote controller (not shown) through the hot-water pipe 38 out of the heat water outlet 81.

The heat-pump water heater 50 includes a compressor 53, a gas cooler 51, an expansion valve 59, and an evaporator 52. The gas cooler 51 exchanges heat between a high-temperature refrigerant emitted from the compressor 53 and tap water. These components are connected by a refrigerant pipe 54 to form a heat pump circuit. The heat pump circuit according to the present embodiment is a supercritical heat pump circuit using carbon dioxide as a refrigerant. The evaporator 52 is provided with a fan unit 55 cooling the evaporator 52.

Power is supplied from the interconnection point 34 via a breaker 67 to the heat-pump water heater 50, whereby electric power is distributed for driving the compressor 53, the fan unit 55, and various types of sensors, for example, in the heat-pump water heater 50.

The hot-water tank 41 incorporates a hot-water tank heat exchanger 61 to which an antifreeze solution, which will be described later, is supplied so as to perform heat exchange with the antifreeze solution and raise the temperature of the tap water. The hot-water tank heat exchanger 61 is a heat exchanger with a pipe wound like a coil through which the antifreeze solution flows. The hot-water tank heat exchanger 61 is contained in the hot-water tank 41 storing tap water.

The hot-water tank 41 is connected with a tap-water pipe 36 for supplying tap water to the hot-water tank 41 and also with a hot-water system inlet 37 through which tap water that has been heated in the hot-water tank heat exchanger 61 is supplied to the heat-pump water heater 50. The hot-water system inlet 37 is connected to a water inlet 51a of the gas cooler 51 via a hot-water valve 56. A water outlet 51b of the gas cooler 51 is connected via a three-way hot-water valve 57 to the hot-water pipe 38.

The pipes in this configuration are connected such that the tap water and refrigerant supplied to the gas cooler 51 flow in opposite directions, whereby heat exchange of the tap water with the refrigerant is efficiently performed.

The tap-water pipe 36 is provided with a water valve 88 downstream of which is connected to a tap-water pipe 35 branched from the tap-water pipe 36. The tap-water pipe 35 is connected via a water valve 58 to the hot-water system inlet 37 between the water inlet 51a of the gas cooler 51 and the hot-water valve 56. The tap-water pipe 35 is provided with a temperature sensor (not shown) disposed upstream the water valve 58 to detect the temperature of tap water.

The hot-water tank 41 has a liquid level sensor 98 detecting the amount of hot water contained therein (tap water contained in the hot-water tank) and a temperature sensor 96 detecting the temperature of the hot water. When the liquid level sensor 98 detects a decrease in the amount of hot water contained down to a certain level or less, the water valve 88 opens and tap water is supplied to the hot-water tank 41. The hot-water tank 41 is supplied with system power from the interconnection point 34 via a breaker 66, and the power is then supplied to the sensors 96 and 98, for example.

The three-way hot-water valve 57 is connected with a hot-water pipe 84 extending from the hot-water system inlet 37 to lead hot water while bypassing the gas cooler 51. If the set temperature input by the user is lower than the temperature of hot water supplied from the hot-water tank 41 to the hot-water system inlet 37, the three-way hot-water valve 57 opens so that hot water flows through the hot-water pipe 84, while the hot-water valve 56 and the water valve 58 open so that the hot water supplied from the hot-water tank 41 is mixed with tap water to adjust the temperature of the hot water with respect to the set temperature input by the user.

If the set temperature input by the user is higher than the temperature of hot water supplied from the hot-water tank 41 to the hot-water system inlet 37, the three-way hot-water valve 57 opens so that hot water flows through the hot-water system inlet 37 via the gas cooler 51 and is closed on the hot-water pipe 84 side, while the hot-water valve 56 opens and the water valve 58 is closed, whereby the hot water supplied from the hot-water tank 41 through the hot-water system inlet 37 flows in the gas cooler 51, heated through heat exchange with the refrigerant in the gas cooler 51, and then supplied via the three-way hot-water valve 57 through the heat water outlet 81. If the temperature supplied from the hot-water tank 41 to the hot-water system inlet 37 is lower than the temperature of tap water, the hot-water valve 56 is closed while the water valve 58 opens, whereby the tap water flows through the hot-water system inlet 37 and is heated through heat exchange with the refrigerant in the gas cooler 51, and then supplied via the three-way hot-water valve 57 through the heat water outlet 81.

The hot-water tank 41 is, for example, connected with a heater 87, such as a floor heating appliance, besides the heat-pump water heater 50, and is so configured that the hot water heated in the hot-water tank 41 passes through a pump 85 and three-way valve 86, for example, and circulates between the hot-water tank 41 and the heater 87.

Circulating paths for an antifreeze solution connected to the hot-water tank heat exchanger 61 will now be described. The hot-water tank heat exchanger 61 is connected with a return pipeline 42 and an outward pipe line 43 through which an antifreeze solution flows into or out of the hot-water tank heat exchanger 61. The return pipeline 42 is connected with a return pump 42a for circulating the antifreeze solution toward the hot-water tank heat exchanger 61.

The return pipeline 42 is connected with a return header 63. Connected to the return header 63 are a heat recovery circuit 71 for a solar water heater panel through which an antifreeze solution that has recovered heat in a solar water heater panel 62 designed to produce heated water using solar heat flows, a heat recovery circuit 72 for a direct-current power generating unit through which an antifreeze solution that has recovered heat from the solar panel included in the photovoltaic power generating unit 12 flows, and a heat recovery circuit 73 for a driving source through which an antifreeze solution that has recovered heat in the driving-source heat exchanger 27 from the cooling water for the gas engine 24 provided to the exterior unit 21 of the air conditioner 20 flows.

The outward pipeline 43 is connected with an outward header 64 that is further connected with fluid pipes 45, 46, 47. The fluid pipe 45 is connected via a pump 45a to the photovoltaic power generating unit 12. The fluid pipe 46 is connected via a pump 46a to the solar water heater panel 62. The fluid pipe 47 is connected via a pump 47a to the driving-source heat exchanger 27, which cools the gas engine 24 with water. The pumps 45a, 46a, 47a are push pumps designed to push the antifreeze solution whose temperature is lowered through heat exchange with tap water in the hot-water tank heat exchanger 61 into the photovoltaic power generating unit 12, the solar water heater panel 62, and the driving-source heat exchanger 27, respectively, from the outward header 64 to make the antifreeze solution circulate therealong.

The return header 63 and the outward header 64 are connected through a bypass pipe 44 to which a first motor-operated valve 48A is provided. A differential-pressure sensor 95 is provided between an outlet 63a of the return header 63 and an inlet 64b of the outward header 64. Furthermore, a second motor-operated valve 48B is provided downstream of the return pump 42a of the return pipeline 42.

In this configuration, if the temperature sensor 96 provided in the hot-water tank 41 detects that the temperature of the hot water stored in the hot-water tank 41 is approaching a certain temperature (e.g., 60 degrees Celsius or higher), the opening degree of the second motor-operated valve 48B is decreased so as to suppress the load imposed by heat exchange on the hot-water tank heat exchanger 61, thereby adjusting the flow rate of the antifreeze solution flowing through the hot-water tank heat exchanger 61. In this manner, the voltage on the outlet 63a side of the return header 63 increases, and the opening degree of the first motor-operated valve 48A is increased according to the detection result of the differential-pressure sensor 95 provided between the outlet 63a of the return header 63 and the inlet 64b of the outward header 64. As a result, the antifreeze solution flows from the return header 63 to the outward header 64, bypassing the hot-water tank heat exchanger 61.

The detection result of the differential-pressure sensor 95 falls out of a certain voltage range when pipe clogging or any other problem occurs in the hot-water tank heat exchanger 61. The opening degree of the first motor-operated valve 48A is increased according to this detection result. As a result, the antifreeze solution flows through the bypass pipe 44 from the return header 63 directly to the outward header 64, bypassing the hot-water tank heat exchanger 61.

According to the first embodiment, the driving-source heat exchanger 27 for cooling the gas engine 24 with water is provided to the exterior unit 21 of the air conditioner 20 including the compressor 23 driven by the gas engine 24. The driving-source heat exchanger 27 performs heat exchange between cooling water and an antifreeze solution to lower the temperature of the cooling water and raise the temperature of the antifreeze solution. Then, heat exchange between the antifreeze solution and tap water is performed in the hot-water tank heat exchanger 61 contained in the hot-water tank 41 storing tap water to lower the temperature of the antifreeze solution and raise the temperature of the tap water. The tap water with an increased temperature is then supplied to the heat-pump water heater 50 for supplying hot water.

Therefore, such a simple configuration that the hot-water tank 41 incorporates the hot-water tank heat exchanger 61 in which an antifreeze solution circulates enables efficient use of exhaust heat from the gas engine 24 for heating the tap water in the hot-water tank 41. In this manner, energy consumption by the heat-pump water heater 50 can be reduced, whereby efficiency in supplying hot water from the heat-pump water heater 50 is increased and energy conservation is enhanced.

According to the first embodiment, the solar water heater panel 62 is provided, and an antifreeze solution heated by the solar water heater panel 62 is merged with an antifreeze solution heated by means of exhaust heat from the gas engine 24, so that the antifreeze solutions will circulate in the hot-water tank heat exchanger 61. Therefore, solar heat as well as exhaust heat from the gas engine 24 is used to raise the temperature of tap water stored in the hot-water tank 41, whereby energy conservation can be further enhanced.

According to the first embodiment, an antifreeze solution flowing along the back surface of the solar panel is merged with the antifreeze solution heated by means of exhaust heat from the gas engine 24 and the antifreeze solution heated by means of solar heat by the solar water heater panel 62 so that the antifreeze solutions will circulate in the hot-water tank heat exchanger 61 in order to prevent a decrease in the output of the photovoltaic power generating unit 12 as the solar panel of the photovoltaic power generating unit 12 is heated by solar radiation to a high temperature. In this configuration, energy conservation can be further enhanced.

According to the first embodiment, the return header 63 is provided to merge the antifreeze solution heated by means of exhaust heat from the gas engine 24, the antifreeze solution heated by means of solar heat by the solar water heater panel 62, and an antifreeze solution heated by cooling the solar panel of the photovoltaic power generating unit 12 with water, and the outward header 64 is provided to distribute the antifreeze solutions merged by the return header 63 to individual pieces of equipment via the hot-water tank heat exchanger 61. The return header 63 and the outward header 64 are connected through the bypass pipe 44 to which the first motor-operated valve 48A is provided. The differential-pressure sensor 95 is provided to detect a differential pressure between the outlet 63a of the return header 63 and the inlet 64b of the outward header 64. In this configuration, the opening degree of the first motor-operated valve 48A is increased when any problem occurs in the hot-water tank heat exchanger 61, so that the antifreeze solutions will circulate bypassing the hot-water tank heat exchanger 61. Therefore, the operation of the hot-water system 2 can be maintained even when abnormal pressure or any other problem occurs in the hot-water tank heat exchanger 61. The downtime of the hot-water system 2 can be reduced as much as possible for maintenance of the hot-water tank 41 or in other occasions.

According to the first embodiment, the second motor-operated valve 48B is provided in the return pipeline 42 through which the merged antifreeze solutions flow from the return header 63 to the hot-water tank heat exchanger 61. The opening degree of the second motor-operated valve 48B is decreased if the temperature of hot water stored in the hot-water tank 41 is equal to or exceeds a certain temperature so as to adjust the flow rate of the antifreeze solution flowing through the hot-water tank heat exchanger 61. In addition, the differential-pressure sensor 95 detects a differential pressure between the outlet 63a and the inlet 64b, and the opening degree of the first motor-operated valve 48A is increased, so that the antifreeze solutions will circulate bypassing the hot-water tank heat exchanger 61. This configuration can adjust the load imposed by heat exchange on the hot-water tank heat exchanger 61 and prevent the hot water in the hot-water tank 41 from being heated up to a certain temperature or higher.

According to the first embodiment, the hot-water system inlet 37 of the heat-pump water heater 50 is connected with the hot-water pipe 84 that is further connected via the three-way hot-water valve 57 and the hot-water pipe 38 to the heat water outlet 81. If a set temperature input by a user is lower than the temperature of hot water supplied from the hot-water tank 41 to the hot-water system inlet 37, hot water whose temperature is adjusted to an adequate level by merging the hot water supplied from the hot-water tank 41 and tap water is supplied from the hot-water pipe 84 to the heat water outlet 81, bypassing the gas cooler 51 in the heat-pump water heater 50. This makes it possible to perform follow-up operation for operating the heat-pump water heater 50 as an auxiliary heat source only when it is necessary to supply hot water. Consequently, energy conservation can be achieved and the amount of CO₂ (carbon dioxide) emissions can be cut significantly by the operation of the heat-pump water heater 50.

While the first embodiment is designed to use exhaust heat from the photovoltaic power generating unit and the GHP as described above, the invention is not limited thereto. For example, fuel cells can be also provided so as to recover and use exhaust heat from the fuel cells.

While the first embodiment is designed to include a single hot-water tank 41, the invention is not limited thereto. A plurality of systems can be arranged in parallel for using exhaust heat, each including a circulating circuit for antifreeze solutions including the secondary side of the return header 63 and the outward header 64, more specifically, the return pipeline 42, the hot-water tank heat exchanger 61, and the outward pipeline 43 on the secondary side of the differential-pressure sensor 95 as well as the hot-water tank 41, the heat-pump water heater 50, and the heater 87, for example. It should be understood that other pipe configurations and detailed configurations, for example, can be adopted optionally.

### Second Embodiment

A second embodiment of the invention will now be described. In the first embodiment, power consumed by the loads is detected, the detected amount of power is compared with the power generated by the generator and the photovoltaic power generating unit, and whether the generated power is charged in the battery or supplied to the loads is determined, such that battery power is used efficiently. In the second embodiment, the amount of power to be consumed by the loads and power generated by the generator and the photovoltaic power generating unit are predicted, such that battery power is used efficiently.

The entire configuration of an air conditioning system of the second embodiment is the same as that of the first embodiment. Therefore, like components are denoted by like numerals, and their detailed description is omitted.

The system controller 3 according to the second embodiment detects power supplied to the loads 22 detected by the detector 32. The system controller 3 also functions to detect the voltage of the commercial power system 11 that is connected to the loads 22 from the commercial power system 11. The system controller 3 also detects power supplied to the individual loads and acquires detection values. Accordingly, the system controller 3 detects power input from the commercial power system 11 and the power inverter unit 15 to the individual loads and calculates power consumed by the loads 22 based on the power detected.

The system controller 3 is connected with a solar radiation sensor (not shown) and also incorporates a clock. The system controller 3 communicates with the photovoltaic power generating unit 12, the generator 13, the battery 18, and the loads 22 based on detection of solar radiation detected by the solar radiation sensor, the remaining level of the battery 18, time at which detection values were detected, and the current time, and controls supply of the power generated by the photovoltaic power generating unit 12 and the generator 13, charging start or stop for the battery 18, power supply from the battery 18 to the loads 22, and operation of the loads 22, for example.

How the system controller 3 controls power supply to the loads 22 will now be described. As the loads 22 consume power, the system controller 3 supplies power sourced from the commercial power system 11 or the power inverter unit 15. Furthermore, the clock (not shown) incorporated in the system controller 3 acquires the current time of the clock and the solar radiation sensor (not shown) detects solar radiation. The system controller 3 supplies power constantly from the photovoltaic power generating unit 12 to the loads 22 as long as solar radiation detectable by the solar radiation sensor is available. When solar radiation is available, the system controller 3 supplies power generated by the solar panel to the loads 22.

The system controller 3 determines the ratio of power supplied from the commercial power system 11 to the loads 22 and power supplied from the power inverter unit 15 to the loads 22 based on previously set time periods, predicted power consumption of the loads 22 for the day, a predicted amount of power generated by the photovoltaic power generating unit 12 for the day, a predicted amount of power generated by the generator 13 for the day, and the remaining level of the battery 18. The system controller 3 controls the amount of power discharged from the battery 18 as needed based on the ratio of power supplied from the power inverter unit 15 thus determined, the total power consumption of the loads 22, and the amounts of power generated by the photovoltaic power generating unit 12 and the generator 13.

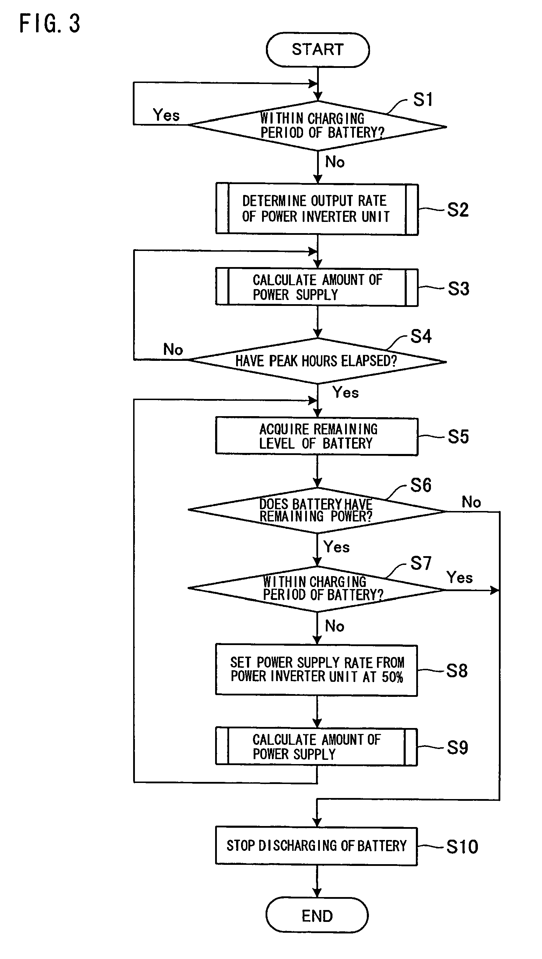

Fig. 3 is a flowchart of power control performed by the system controller 3. As illustrated in Fig. 3, the system controller 3 determines whether the current time falls within a time period set as a charging period of the battery 18 (step S1). If the current time falls within a charging period of the battery 18, the system controller 3 waits until the current time reaches the time when charging of the battery 18 is completed (e.g., 07:00 in the morning). If the current time passes over a charging period of the battery 18 (step S1: No), the system controller 3 determines the ratio of power output from the power inverter unit 15 with respect to the power consumed by the loads 22 (step S2). Subsequently, the system controller 3 calculates the amount of power supplied from the battery 18 to the loads 22 based on the ratio of power output from the power inverter unit 15 thus determined and controls discharging of the battery 18 (step S3).

The system controller 3 determines whether peak hours of power consumption of the loads 22 have elapsed based on the current time (step S4), and the process returns to step S3 and is repeated until the peak hours elapse. The system controller 3 applies the ratio of power output from the power inverter unit 15 determined in step S2 to the calculation of the discharging amount of the battery 18 until the peak hours elapse.

The peak hours of power consumption of the loads 22 may be set by month or season. More specifically, the peak hours may be set at 12:00 to 16:00 when air conditioning load peaks in summer, and be set in the morning and evening when air conditioning load is comparatively large in the other seasons. Alternatively, the same time period (e.g., from 12:00 to 15:00) may be set throughout the year. The peak operation hours are set and stored in the system controller 3 in advance. When storing a plurality of set values as peak operation hours, the system controller 3 selects an appropriate set value based on the current date.

After the peak hours of power consumption of the loads 22 have elapsed (step S4: Yes), the system controller 3 acquires the remaining level of the battery 18 (step S5), and thereafter determines whether the battery 18 has remaining power (step S6). If the battery 18 has remaining power, the system controller 3 determines whether the current time falls within a charging period of the battery 18 (step S7). If the current time does not fall within a charging period of the battery 18, the ratio of power supplied from the power inverter unit 15 to the loads 22 is set at 50%, for example (step S8).

If the battery 18 has remaining power after the peak hours of power consumption of the loads 22 have elapsed, the power remaining in the battery 18 is desirably discharged as much as possible until a charging period of the battery 18 begins in order to use economical midnight or night-time power efficiently. For this reason, the system controller 3 sets the ratio of power supplied from the power inverter unit 15 to the loads 22 at as high as 50% in step S8 if the battery 18 has remaining power after the peak hours have elapsed. Alternatively, the system controller 3 may make the ratio of power supplied from the power inverter unit 15 increase step by step from, for example, 50% to 60%, as time passes, whereby the power remaining in the battery 18 is used up in a more reliable manner.

If the ratio of power supplied from the power inverter unit 15 to the loads 22 is set after the peak hours of power consumption of the loads 22 have elapsed, the system controller 3 calculates the amount of power to be supplied from the battery 18 to the loads 22 based on the ratio of power supply thus set and controls discharging of the battery 18 (step S9). This process is the same as the process performed in step S3.

Subsequently, discharging of the battery 18 continues until the remaining level of the battery 18 becomes zero (step S6: No) or until a charging period of the battery 18 begins (step S7: Yes). The system controller 3 calculates the amount of power that needs to be discharged from the battery 18 as needed based on the power consumed by the loads 22 and performs control accordingly.

If the battery 18 has no remaining power after the peak hours of power consumption of the loads 22 have elapsed (step S6: No), or if the current time reaches a charging period of the battery 18 (step S7: Yes), the system controller 3 causes discharging of the battery 18 to stop, thereby stopping power supply from the battery 18 to the loads 22 (step S10).

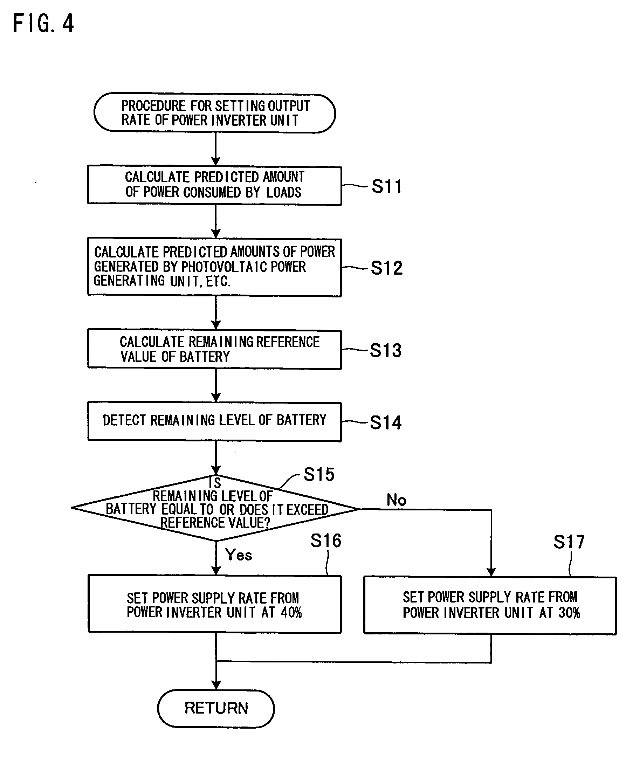

Fig. 4 is a flowchart showing the detailed procedure for setting the ratio of output from the power inverter unit. The procedure for setting the ratio of power supplied from the power inverter unit to the loads 22 in step S2 in Fig. 3 will now be described with reference to Fig. 4.

The system controller 3 starts the procedure by, as illustrated in Fig. 4, calculating a predicted amount of power consumed by the loads 22 for the day (step S11). The system controller 3 detects or acquires meteorological data, such as temperature, and weather data based on detection values of the temperature and solar radiation sensors (not shown), or meteorological information distributed by a company or organization providing meteorological information and received with a meteorological information receiver (not shown) in a predetermined cycle, and stores these pieces of data in association with the power consumed by the loads 22 and the amounts of power generated by the photovoltaic power generating unit 12 and the generator 13 as needed. The system controller 3 calculates a predicted amount of power consumed by the loads 22 for the day based on the meteorological data and weather data for the past few days (e.g., for the previous three days).

The system controller 3 then calculates predicted amounts of power generated by the photovoltaic power generating unit 12 and the generator 13 for the day (step S12). The predicted amounts of power generated by the photovoltaic power generating unit 12 and the generator 13 for the day obtained in step S12 are calculated based on the data for the past few days (e.g., for the previous three days) out of the data stored in the system controller 3 and the data on the amounts of power generated by the photovoltaic power generating unit 12 and the generator 13 as described above.

The predicted amount of power consumed by the loads 22 for the day and the predicted amounts of power generated by the photovoltaic power generating unit 12 and the generator 13 can be the predicted amounts of power consumed and generated during the peak hours of power consumption of the loads 22, or be the predicted amounts of power consumed and generated throughout the day.

The system controller 3 then calculates a remaining reference value of the battery 18 (step S13). The remaining reference value of the battery 18 is a reference value for determining whether the remaining level of the battery 18 is sufficient as described later, and is determined based on the ratio of the predicted amounts of power generated by the photovoltaic power generating unit 12 and the generator 13 with respect to the predicted amount of power consumed by the loads 22 for the day. The reference value is not limited to a single value, and can be set at two remaining reference values X and Y, one for the ratio of the predicted amounts of power generated by the photovoltaic power generating unit 12 and the generator 13 with respect to the predicted amount of power consumed by the loads 22 for the day being equal to or exceeding 20% and the other for the ratio being below 20%. The remaining reference values X and Y are set in the system controller 3 in advance, and either one is selected by the system controller 3 based on the ratio of the predicted amounts of power generated by the photovoltaic power generating unit 12 and the generator 13 with respect to the predicted amount of power consumed by the loads 22 for the day.

The power discharged from the battery 18 is such that it compensates for the shortage of power supplied from the photovoltaic power generating unit 12 and the generator 13 if the ratio of the predicted amounts of power generated by the photovoltaic power generating unit 12 and the generator 13 with respect to the predicted amount of power consumed by the loads 22 for the day is high. In this case, the remaining reference value X of the battery 18 can be set low. On the other hand, power supplied from the battery 18 to the loads 22 is high if the ratio of the predicted amounts of power generated by the photovoltaic power generating unit 12 and the generator 13 with respect to the predicted amount of power consumed by the loads 22 for the day is low. In this case, the remaining reference value Y of the battery 18 is set higher than the remaining reference value X, so that the battery 18 can be discharged throughout the peak hours of power consumption of the loads 22.

Subsequently, the system controller 3 detects the remaining level of the battery 18 (step S14) and determines whether the remaining level is equal to or exceeds a remaining reference value (selected one of the remaining reference values X and Y) (step S15). If the remaining level of the battery 18 is equal to or exceeds the remaining reference value (step S15: Yes), the system controller 3 sets the ratio of power supplied from the power inverter unit 15 to the loads 22 with respect to power consumed thereby high (at 40%, for example), so that the power discharged from the battery 18 can be completely consumed on that same day (step 16). Conversely, if the remaining level of the battery 18 is below the remaining reference value (step S15: No), the system controller 3 sets the ratio of power supplied from the power inverter unit 15 to the loads 22 with respect to power consumed thereby at a low ratio (30%, for example, in step 17).

The ratio of power supplied from the power inverter unit 15 is set based on the amount of power consumed by the loads 22 for the day, the amounts of power generated by the photovoltaic power generating unit 12 and the generator 13, and the remaining level of the battery 18 through the procedure for setting the ratio of output from the power inverter unit illustrated in Fig. 4.

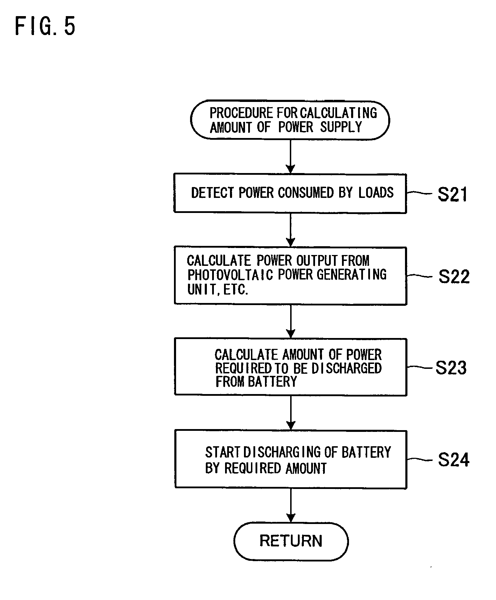

Fig. 5 is a flowchart showing the detailed procedure for calculating the amount of power supply. The procedure for calculating the amount of power supplied from the battery 18 to the loads 22 in steps S3 and S9 in Fig. 3 will now be described with reference to Fig. 5.

The system controller 3 starts the procedure by communicating with the detector 32 and acquires power consumed by the loads 22 (step S21). The system controller 3 then calculates power generated by the photovoltaic power generating unit 12 and the generator 13 (step S22). Subsequently, the system controller 3 compares the power consumed by the loads 22 and the power generated by the photovoltaic power generating unit 12 and the generator 13, and calculates the amount of power to be discharged from the battery 18 based on the ratio of power supplied from the photovoltaic power generating unit 12 and the generator 13 to the loads 22 with respect to power consumed thereby (step S23). After calculating the amount of power that needs to be discharged from the battery 18, the system controller 3 starts the discharging of the battery 18 (step S24).

The amount of power to be discharged from the battery 18 varies as needed depending on the total power consumed by the loads 22 and the power generated by the photovoltaic power generating unit 12 and the generator 13. Therefore, the system controller 3 constantly monitors power being discharged from the battery 18 while the battery 18 is discharged and repeatedly implements the procedure of steps S21 through S24 in a predetermined cycle, thereby adjusting the power to be discharged.

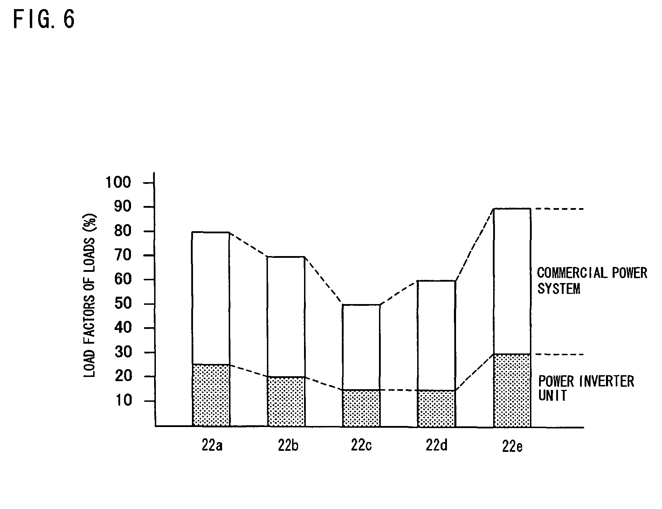

Fig. 6 is a chart illustrating the ratios of the power supplied from the commercial power system 11 and from the power inverter unit 15 with respect to the power consumed by the loads 22 with the ratio of the power supplied from the power inverter unit 15 set at 30% as an example of an operational state of the loads 22. Fig. 6 represents five loads among a plurality of loads. The load factor of each of the loads 22a to 22e is calculated based on power consumed by the respective loads 22a to 22e with respect to power consumed during the rated operation of the loads 22a to 22e.

If the ratio of the power supplied from the power inverter unit 15 is set at 30% with respect to the total power consumed by the loads 22a to 22e, the system controller 3 controls the amount of power discharged from the battery 18 according to this ratio (30%). The voltage of the power supplied from the power inverter unit 15 to the loads 22 is boosted to levels one to several volts higher than the voltage of the power supplied from the commercial power system 11. Accordingly, the ratio of the amount of power supplied from the power inverter unit 15 with respect to the power consumed by the loads 22a to 22e is uniformly 30% as shown in Fig. 6. The remaining 70% of the power is sourced from the commercial power system 11.

The system controller 3 sets the predicted amount of power consumed by the loads 22 for the day, the predicted amount of power generated by the photovoltaic power generating unit 12 for the day, the remaining level of the battery 18, and the ratio of the power supplied from the power inverter unit 15 including the photovoltaic power generating unit 12 and the battery 18 with respect to the power supplied to and consumed by the loads 22. To vary the amount of power discharged from the battery 18 as needed depending on this ratio and the amount of power output from the photovoltaic power generating unit 12, the power supplied from the photovoltaic power generating unit 12 is used preferentially, while the power discharged from the battery 18 is used supplementarily. In this manner, energy conservation can be enhanced.

To vary the ratio of the power supplied from the power inverter unit 15 before and after the elapse of the peak hours of power consumption in accordance with the remaining level of the battery 18, the system controller 3 raises the ratio of output from the battery 18 after the peak hours, so that the power of the battery 18 will be completely consumed on that same day. In this manner, the power supplied from the battery 18 can be used efficiently. Furthermore, the ratio of the power supplied from the commercial power system 11 is set with respect to the power consumed by the loads 22, whereby energy efficiency can be enhanced with reactive power reduced in the loads 22a to 22e.

As described above, while the two remaining reference values X and Y are set, one of which is for the ratio of the predicted amounts of power generated by the generator 13 and the photovoltaic power generating unit 12 with respect to the predicted amount of power consumed by the loads 22 for the day being equal to or exceeding 20% and the other of which is for the ratio being equal to or below 20% in the second embodiment, the invention is not limited thereto. A plurality of remaining reference values may be set based on the ratio of the predicted amounts of power generated by the generator 13 and the photovoltaic power generating unit 12 with respect to the predicted amount of power consumption.

### Third Embodiment

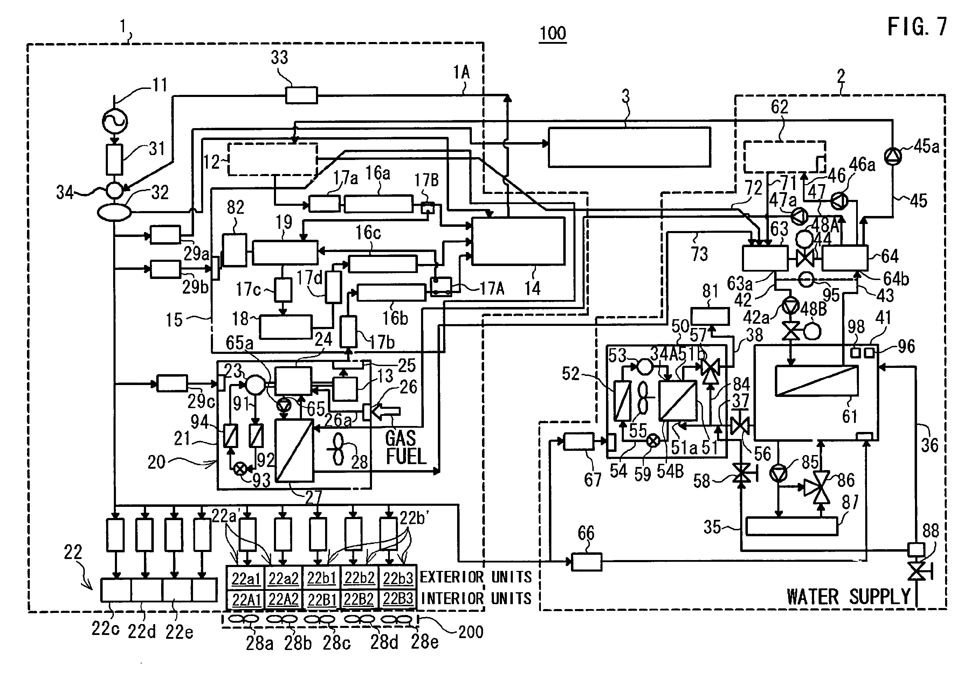

Specific configurations of air conditioners 22a' and 22b' according to a third embodiment of the invention will be described with reference to Figs. 7 to 10. Like components employed also in the first and second embodiments are denoted by like numerals in the third embodiment, and their detailed description is omitted.

The air conditioning system 100 according to the third embodiment includes, as illustrated in Fig. 7, the power system 1, the hot-water system 2, and the system controller (corresponding to the controller according to some aspects of the invention) 3 monitoring and controlling the operational state of each component included in the air conditioning system 100.

The generator 13 is provided to the exterior unit 21 of a air conditioning system 20. The exterior unit 21 of the air conditioning system 20 includes the gas engine 24 fueled with gas, the gas pipe 26a for supplying gas to the gas engine 24, and the gas supply inlet 26 to which the gas pipe 26a is connected. Gas fuel is supplied through the gas supply inlet 26 to the gas engine 24 via the gas pipe 26a, thereby driving the gas engine 24.

The air conditioning system 20 includes the compressor 23 driven by the gas engine 24 as a driving source, the refrigerant pipe 91 for circulating a refrigerant compressed by the compressor 23, and a refrigerating cycle including the condenser 92, the decompressor 93, and the evaporator 94, for example, that are connected via the refrigerant pipe 91. During operation of the exterior unit 21 of the air conditioning system 20, driving the compressor 23 by the gas engine 24 establishes the refrigerating cycle, thereby enabling the air conditioning function. The air conditioning function is performed by interior units. The interior units are constantly operated while the exterior unit 21 operates, and are not shown to simplify the description. The generator 13 is driven to generate power by using surplus energy of the gas engine 24. The power thus generated is converted from alternating current to direct current in the rectifier circuit 25, and the resultant power is input in the power inverter unit 15 and then supplied to the battery 18 or the PCS 14.

The commercial power system 11 includes the main circuit breaker 31 and the detector 32 and is interconnected to the PCS 14 via these components. The commercial power system 11 distributes electric power to the system controller 3 via the breaker 29a, to the power inverter unit 15 via the breaker 29b, and to the exterior unit 21 of the gas heat pump cogeneration system (hereinafter simply referred to as the air conditioning system) 20 incorporating the generator 13 via the breaker 29c, thereby supplying power for driving the respective units. In addition, the detector 32 according to the third embodiment prevents reverse power flow, so that no current will flow from the systems toward an electric utility. The detector 32 also detects power supplied to the loads.

The power system 1 includes the commercial power system 11 supplied from an electric utility and a plurality of external power generating units interconnected to the commercial power system 11. The external power generating units according to the third embodiment are composed of the photovoltaic power generating unit 12 as a direct-current power generating unit, the GHP generator (hereinafter simply referred to as the generator) 13 attached to a gas engine-driven heat pump (GHP) driven by this gas engine, and the battery 18. The power system 1 also includes the PCS 14 incorporating a system interconnection protector. The photovoltaic power generating unit 12, the generator 13, and the battery 18 are interconnected to the commercial power system 11 via the PCS 14. The PCS 14 includes an inverter and breaker unit, converts direct-current power input from the systems interconnected thereto into alternating-current power, detects short-circuiting, excess current or voltage, or other system failures (malfunctions) in the systems interconnected thereto, and disconnects an external power generating unit or the like in which any failure is detected from the power system 1. The battery 18 and the PCS 14 are incorporated in the power inverter unit 15.

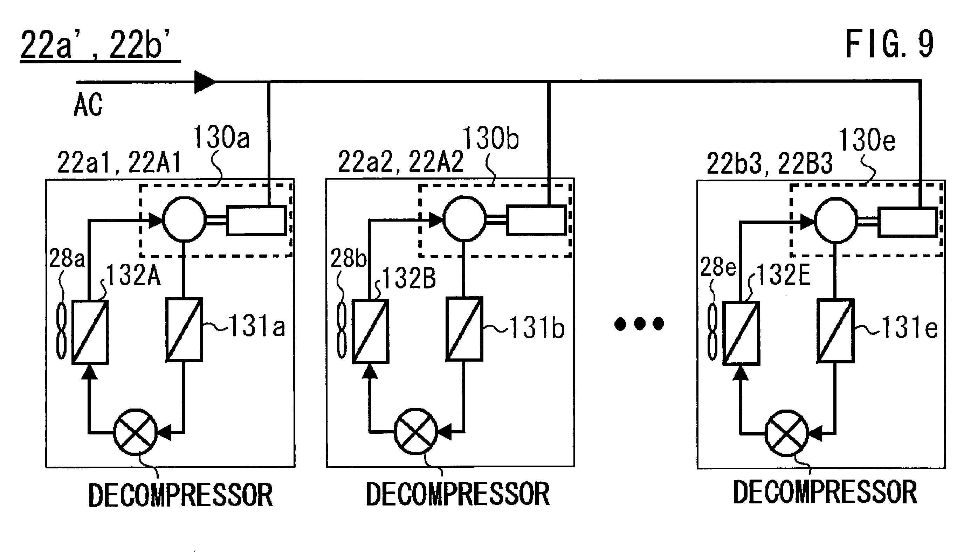

As illustrated in Figs. 7 to 9, each air conditioner 22a' includes a plurality of exterior units 22a1 and 22a2 and a plurality of interior units 22A1 and 22A2, and each air conditioner 22b' includes a plurality of exterior units 22b1 to 22b3 and a plurality of interior units 22B1 to 22B3. The exterior units 22a1, 22a2, 22b1 to 22b3 are supplied with alternating-current power through wiring as illustrated in Fig. 9, and include respective variable rotational speed compressors 130a to 130e, each including an inverter, and respective heat exchangers 131a to 131e for heat sources. The interior units 22A1, 22A2, 22B1 to 22B3 include respective heat exchangers 132A to 132E for air conditioners and respective interior fans 28a to 28e.

The commercial power system 11 is connected with the lighting equipment 22c and 22d and the office automation equipment 22e as the loads 22 receiving power supply from the power system 1, the exterior units 22a1, 22a2, 22b1 to 22b3 and the interior units 22A1, 22A2, 22B1 to 22B3 of the air conditioners 22a' and 22b' with respective breakers interposed therebetween. The commercial power system 11 is also connected with the system controller 3 with the main circuit breaker 31 and the breaker 29a interposed therebetween. The system controller 3 is connected with a solar radiation sensor (not shown). The system controller 3 incorporates a real-time clock (RTC) (not shown) keeping track of the current time. The system controller 3 communicates with the photovoltaic power generating unit 12, the PCS 14, and the air conditioners 22a' and 22b' based on the current time of the RTC, and controls supply of the power generated by the photovoltaic power generating unit 12 to the air conditioners 22a' and 22b', charging start or stop for the battery 18, power supply from the battery 18 to the air conditioners 22a' and 22b', and operation of the air conditioners 22a' and 22b', for example.

More specifically, the system controller 3 communicates with the DC/DC converter 16a provided to the photovoltaic power generating unit 12, the DC/DC converter 16c connected and provided to the battery 18, and communication circuits (not shown) provided to the air conditioners 22a' and 22b'. Upon detecting solar radiation with its solar radiation sensor, the system controller 3 drives the DC/DC converter 16a of the photovoltaic power generating unit 12 and causes the DC/DC converter 16a to boost the voltage of power generated by the photovoltaic power generating unit 12 to a certain voltage. The system controller 3 also closes the magnetic switch 17a so as to supply power from the DC/DC converter 16a to the PCS 14 or the battery charger 19 via the switch 17B, thereby controlling charging start or stop for the battery 18.

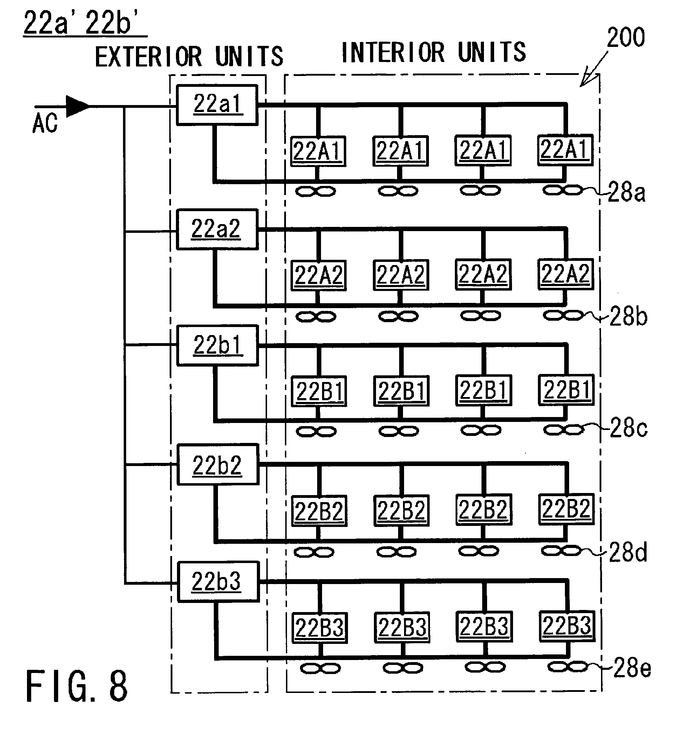

As illustrated in Fig. 8, the air conditioners 22a' and 22b' are configured to connect the exterior units 22a1, 22a2, 22b1 to 22b3 to the interior units 22A1, 22A2, 22B1 to 22B3, respectively, through wiring. The number of each of the interior units 22A1, 22A2, 22B1 to 22B3 connected to the exterior units 22a1, 22a2, 22b1 to 22b3, respectively, may be one or two or more. Fig. 8 illustrates an example in which four interior units are connected in parallel to each of the exterior units 22a1, 22a2, 22b1 to 22b3. The air conditioners 22a' and 22b' can be individually operated or stopped by the control of the system controller 3. According to the present embodiment, the air conditioners 22a' and 22b' have individual refrigerant piping, and refrigerants are not circulated between the air conditioners 22a' and 22b'.

The interior units 22A1, 22A2, 22B1 to 22B3 are provided in a single air-conditioned space 200 to provide air conditioning for the air-conditioned space 200. The exterior units 22a1, 22a2, 22b1 to 22b3 individually and autonomously adjust operation or stop of the variable rotational speed compressors 130a to 130e included in the exterior units 22a1, 22a2, 22b1 to 22b3, respectively, and their operational rotational speeds based on the temperature of the air suctioned in the air-conditioned space 200 or detection temperature of temperature detectors (not shown) provided in the air-conditioned space 200.

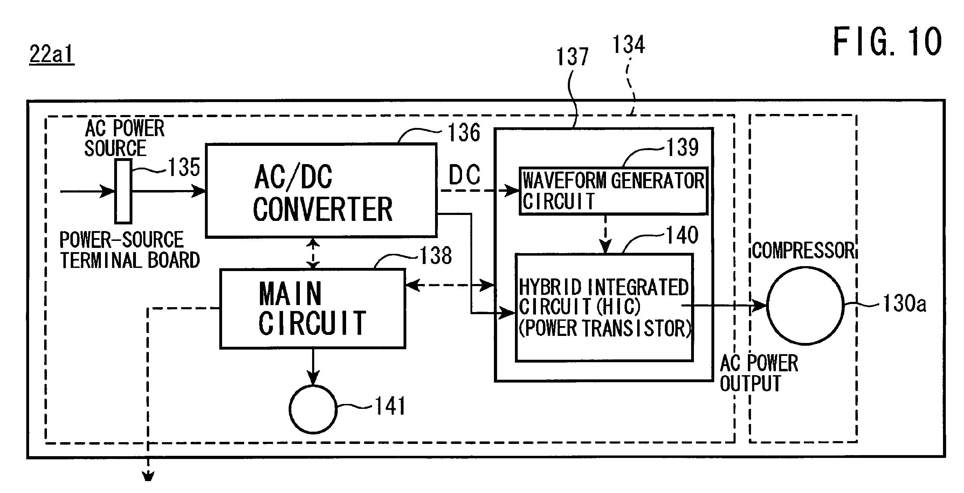

The configuration of the variable rotational speed compressors 130a to 130e included in the exterior units 22a1, 22a2, 22b1 to 22b3, respectively, will now be described. The variable rotational speed compressors 130a to 130e are configured identically as illustrated in Fig. 9, and are each provided with an identically configured electrical container 134 (see Fig. 10). Therefore, the variable rotational speed compressor 130a included in the exterior unit 22a1 is used as an example for the following description.

Fig. 10 is a block diagram illustrating the configuration of the variable rotational speed compressor 130a and the electrical container 134 provided in the exterior unit 22a1 together with the variable rotational speed compressor 130a. The electrical container 134 contains a power-source terminal board 135 receiving inputs of alternating-current power from the commercial power system 11, an AC/DC converter (rectifier) 136 converting the supplied alternating-current power into direct-current power, an inverter circuit 137 converting the direct-current power into alternating-current power having an optional frequency and outputting the resultant power, and a main circuit 138 controlling the operational state of the variable rotational speed compressor 130a based on signals from the system controller 3.

The inverter circuit 137 includes a waveform generator circuit 139 generating and outputting an alternating-current waveform according to the control of the main circuit 138 and a hybrid integrated circuit (HIC) (power transistor) 140 receiving inputs of direct-current power from the AC/DC converter 136, converting the direct-current power into alternating-current power according to the alternating-current waveform output from the waveform generator circuit 139, and outputting the resultant power to a motor (not shown) for driving the variable rotational speed compressor 130a. The main circuit 138 controls the frequency of the alternating-current waveform generated by the waveform generator circuit 139, thereby controlling the rotational speed of the variable rotational speed compressor 130a. In this manner, the variable rotational speed compressor 130a is driven by the alternating-current power that has been re-converted from the direct-current power that has been converted from the alternating-current power supplied from the commercial power system 11.

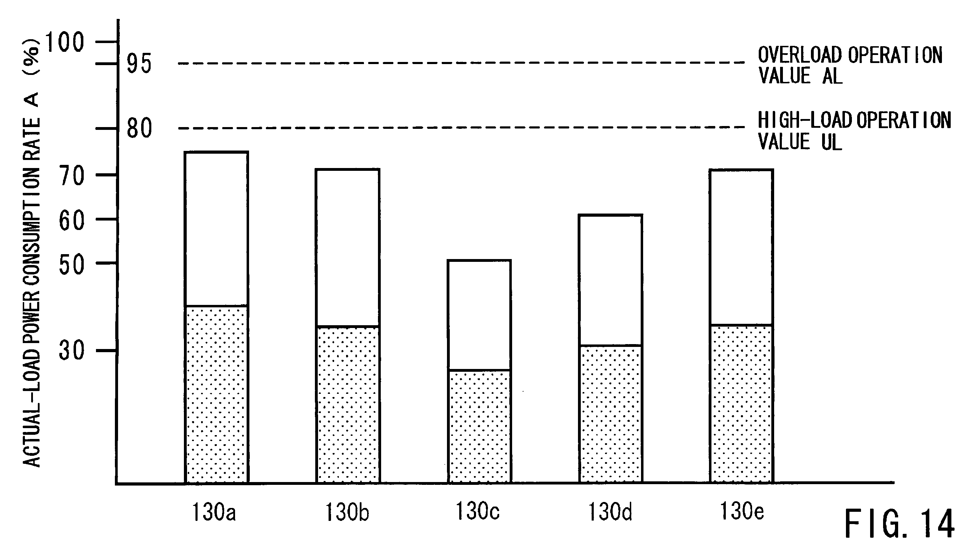

The main circuit 138 constantly calculates an actual-load power consumption rate A of the variable rotational speed compressor 130a as described below and controls the actual-load power consumption rate A so as not to exceed a predetermined overload operation value AL (see Fig. 14). The overload operation value AL is set at 95% (may be at 95% of the maximum rotational speed of the variable rotational speed compressor 130a), for example, and is controlled to suppress excessive load imposed on the variable rotational speed compressor 130a and extend its life. The main circuit 138 is connected to a fan motor 141 for rotating a fan (not shown) provided to the heat exchanger 131a for a heat source in the exterior unit 22a1 and performs control to turn on/off the variable rotational speed compressor 130a and to turn on/off the fan motor 141.

In this configuration, the inverter circuit 137 provided to each of the variable rotational speed compressors 130a to 130e can receive inputs of the direct-current power supplied from the commercial power system 11 via the AC/DC converter 136, whereby power can be supplied to the variable rotational speed compressors 130a to 130e efficiently with reactive power reduced as much as possible.

The operational control for the power system 1 and the air conditioners 22a' and 22b' will now be described. The photovoltaic power generating unit 12 included in the power system 1 generates power depending on solar radiation and outputs direct-current power to the DC/DC converter 16a. The system controller 3 closes the magnetic switch 17a during predetermined hours (e.g., from 07:00 in the morning to 17:59 in the evening) so as to supply the power generated by the photovoltaic power generating unit 12 to the battery charger 19 or the PCS 14.

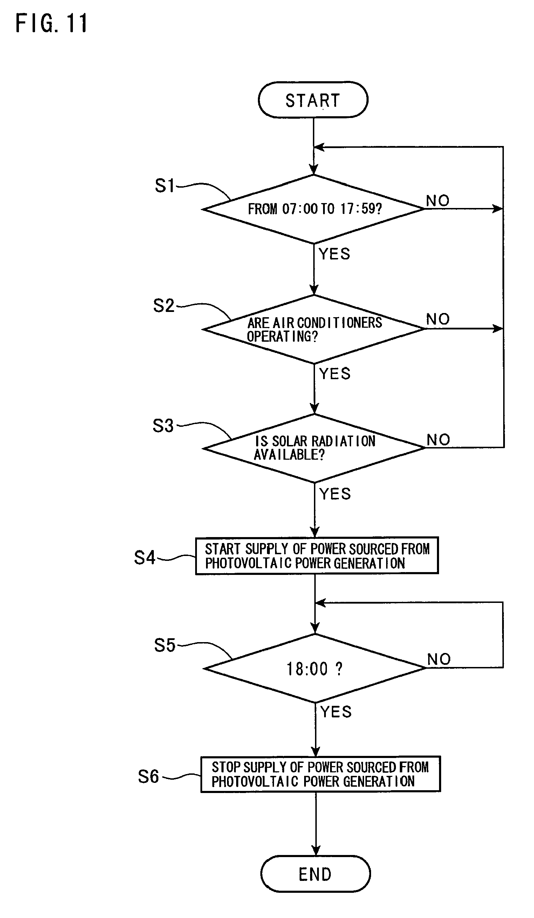

Fig. 11 is a flowchart of control operation for the photovoltaic power generating unit 12 performed by the system controller 3. The system controller 3 starts the procedure by, as illustrated in Fig. 11, determining whether the current time is within a period from 07:00 in the morning to 17:59 in the evening (step S1). If the current time is within a period from 07:00 in the morning to 17:59 in the evening, the system controller 3 determines whether each of the air conditioners 22a' and 22b' is operating (step S2). If each of the air conditioners 22a' and 22b' is operating, the system controller 3 determines whether solar radiation is available (step S3). If solar radiation is available, the system controller 3 closes the magnetic switch 17a and drives the DC/DC converter 16a, thereby starting power supply from the photovoltaic power generating unit 12 to the battery charger 19 or the PCS 14 (step S4). In the procedure described above, the system controller 3 returns to step S1 if the current time is not within a period from 07:00 in the morning to 17:59 in the evening (step S1: No), if the air conditioners 22a' and 22b' are not operating (step S2: No), or if solar radiation is not available (step S3: No).

After the start of power supply from the photovoltaic power generating unit 12 to the battery charger 19 or the PCS 14, the system controller 3 waits until the current time reaches 18:00 (step S5). Once the current time reaches 18:00, the system controller 3 stops the DC/DC converter 16a and opens the magnetic switch 17a, thereby stopping power supply from the photovoltaic power generating unit 12 to the battery charger 19 or the PCS 14 (step S6).

The system controller 3 causes power supply from the photovoltaic power generating unit 12 only if each of the air conditioners 22a' and 22b' is operating during a period from 07:00 to 17:59 and solar radiation is available in this manner. Therefore, the photovoltaic power generating unit 12 generates power efficiently and the generated power is consumed efficiently by the air conditioners 22a' and 22b' via the battery charger 19 or the PCS 14. As a result, the generated power is not wasted and energy conservation can be enhanced.

The system controller 3 controls the battery 18 included in the power system 1 so that the battery 18 is charged with power sourced from the commercial power system 11 in midnight or night-time hours (e.g., from 23:00 to 06:59), during which electricity rate is low based on a late-night power rate contract or hourly power rate contract, while the battery 18 is discharged during daytime hours with large power consumption. Consequently, the consumption of power sourced from the commercial power system 11 is cut during peak hours, and electricity fees are saved accordingly. The system controller 3 controls charging and discharging of the battery 18 based on predetermined timing and availability of solar radiation.

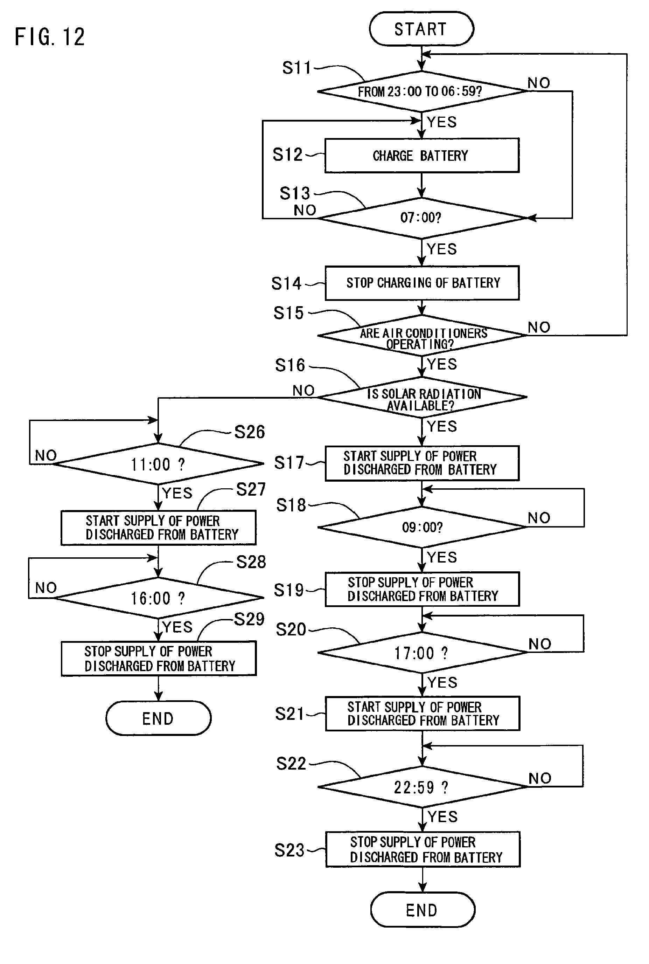

More specifically, the system controller 3 starts the procedure by, as illustrated in Fig. 12, determining whether the current time is within a period from 23:00 in the night to 06:59 in the morning (step S11). If the current time is within a period from 23:00 in the night to 06:59 in the morning, charging of the battery 18 is started by sourcing power from the commercial power system 11 (step S12). Charging of the battery 18 sourcing power from the commercial power system 11 continues until 06:59 in the morning. Once it is determined that the current time reaches 07:00 (step S13), charging of the battery 18 sourcing power from the commercial power system 11 is stopped (step S14).

The system controller 3 then determines whether each of the air conditioners 22a' and 22b' is operating (step S15). If each of the air conditioners 22a' and 22b' is operating, the system controller 3 determines whether solar radiation is available (step S16). The amount of power supplied from the photovoltaic power generating unit 12 is large if solar radiation is available. Therefore, the system controller 3 performs control so that the amount of power discharged from the battery 18 is such that it compensates for the shortage of power supplied from the photovoltaic power generating unit 12. Conversely, if solar radiation is not available, no power is supplied from the photovoltaic power generating unit 12 to the battery 18. Therefore, the system controller 3 performs control so that the battery 18 is discharged during hours in which the air conditioners 22a' and 22b' consume a large amount of power.

In other words, if solar radiation is available (step S16: Yes), the system controller 3 closes the magnetic switch 17d and causes discharging of the battery 18 until the time when the amount of power supplied from the photovoltaic power generating unit 12 increases (e.g., 09:00), and power supply from the battery 18 to the air conditioners 22a' and 22b' is started (step S17). If the current time reaches 09:00 (step S18: Yes), the system controller 3 switches the switch 17A to the battery 18 side and opens the magnetic switch 17d to stop discharging of the battery 18, whereby power supply from the battery 18 to the air conditioners 22a' and 22b' is temporarily stopped (step S19). Subsequently, the system controller 3 waits until the time when the amount of power supplied from the photovoltaic power generating unit 12 decreases (e.g., 17:00) (step S20). If the current time reaches the time when the amount of power decreases (step S20: Yes), the system controller 3 closes the magnetic switch 17d to start discharging of the battery 18, whereby power supply from the battery 18 to the air conditioners 22a' and 22b' is started (step S21). Subsequently, discharging of the battery 18 continues until 22:59 (step S22). If the current time reaches 22:59 (step S22: Yes), the magnetic switch 17d is opened to stop discharging of the battery 18, whereby power supply from the battery 18 to the air conditioners 22a' and 22b' is stopped (step S23).

The system controller 3 constantly monitors the remaining level of the battery 18 during the operation in steps S17 through S22. If the remaining level reaches a predetermined lower limit or lower, the system controller 3 determines that the remaining level becomes zero and stops discharging of the battery 18.

If no solar radiation is available (step S16: No), the system controller 3 waits until the time when power consumption increases (e.g., 11:00). If the current time reaches this timing (step S26: Yes), the system controller 3 starts the battery 18 to supply power to the air conditioners 22a' and 22b' (step S27). Subsequently, the system controller 3 continues the discharging until the peak time of power consumption during daytime hours is over (e.g., 16:00) (step S28). Once the peak time is over (step S28: Yes), the system controller 3 stops the discharging (step S29).

The air conditioning system 100 according to the third embodiment includes the generator 13 connected to the gas engine 24. The system controller 3 controls power from the photovoltaic power generating unit 12, power from the generator 13, and power from the battery 18 as described below, taking not only the load power of the air conditioners 22a' and 22b' but also the load power of other loads into account. For the output of the photovoltaic power generating unit 12, the control procedures illustrated in Figs. 11 and 12 are preferentially performed depending on availability of solar radiation and the current time.

In other words, the magnetic switches 17a to 17d are all closed and the switches 17A and 17B are switched toward the battery charger 19 if the power detected by the detector 32 to be supplied to the loads is equal to or below the sum of the power generated by the generator 13 and the output of the photovoltaic power generating unit 12. The power generated by the generator 13 is supplied via the DC/DC converter 16b toward the battery charger 19, and the output of the photovoltaic power generating unit 12 is supplied to the battery charger 19. The battery 18 is charged as needed with the power sourced from both of these. The power is then supplied to the DC/DC converter 16c and the PCS 14 and further to the loads including the air conditioners 22a' and 22b' through the system line 1A.

The magnetic switches 17a, 17b, and 17d are closed, the magnetic switch 17c is opened, and the switches 17A and 17B are switched toward the PCS 14 if the power detected by the detector 32 to be supplied to the loads exceeds the sum of the power generated by the generator 13 and the output of the photovoltaic power generating unit 12. The power is supplied to the PCS 14 from the generator 13 via the DC/DC converter 16b, from the photovoltaic power generating unit 12 via the DC/DC converter 16a, and as needed from the battery 18 via the DC/DC converter 16c. The power is further supplied to the loads including the air conditioners 22a' and 22b' through the system line 1A.

In the power system 1 as described above, if power supplied to the loads is small, the battery 18 is charged with the power generated by the photovoltaic power generating unit 12 and the power generated by the generator 13 while supplying power to the loads. This reduces power supply from the commercial power system 11, thereby achieving energy conservation. If power consumed by the loads is large, the power generated by the photovoltaic power generating unit 12 and the power generated by the generator 13 are directly supplied to the loads, and furthermore, power that has been charged in the battery 18 is directly supplied to the loads as needed. This improves usage efficiency of the battery 18 and reduces power supply from the commercial power system 11 to a greater extent, thereby achieving energy conservation. Furthermore, the battery 18 can be efficiently used all day long.

The system controller 3 may be provided with a solar radiation sensor for detecting the amount of solar radiation, so that it can determine availability of solar radiation. The system controller 3 may be provided with a meteorological information receiver for receiving meteorological information supplied by a company or organization providing meteorological information and determine availability of solar radiation based on the information received with the meteorological information receiver. Alternatively, the system controller 3 may estimate the amount of solar radiation that is received on a light-receiving surface of the photovoltaic power generating unit 12 based on the amount of power generated by the photovoltaic power generating unit 12 and compare this amount of solar radiation to average amounts of solar radiation by month, hour, and weather, so as to determine the current availability of solar radiation. Alternatively, the system controller 3 may compare the amount of solar radiation detected with the solar radiation sensor with reference values defined based on the orientation, inclination angle, and latitude of the photovoltaic power generating unit 12, the declination of the sun, and meteorological information, for example, so as to determine availability of solar radiation.

The operational control for the air conditioning system 100 according to the third embodiment is performed by the system controller 3 controlling the exterior units 22a1, 22a2, 22b1 to 22b3 and the interior units 22A1, 22A2, 22B1 to 22B3 included in the air conditioners 22a' and 22b' forming a part of the air conditioning system 100. The variable rotational speed compressors 130a to 130e included in the exterior units 22a1, 22a2, 22b1 to 22b3, respectively, deliver the highest energy efficiency when operating near a certain value (e.g., 80%) of power consumption rate with respect to rated-operation (100%) power consumption, while their operational efficiency decreases when operating at a low power consumption rate (e.g., 30%), resulting in poor energy efficiency.

To address this, two values, namely, a high-load operation value UL and a lower limit LL are set in advance as indices for the power consumption rates of the variable rotational speed compressors 130a to 130e and are stored in the system controller 3 according to the third embodiment. The system controller 3 monitors the power consumption rates of the variable rotational speed compressors 130a to 130e and causes any of the variable rotational speed compressors 130a to 130e operating with power consumption equal to or below the lower limit LL to stop, while operating the other variable rotational speed compressors 130a to 130e over the lower limit LL, thereby enhancing energy efficiency.

At the same time, operating the variable rotational speed compressors 130a to 130e at or over the high-load operation value UL for a long period of time can adversely affect the durability of the variable rotational speed compressors 130a to 130e. Therefore, if any of the variable rotational speed compressors 130a to 130e has operated at or over the high-load operation value UL for or over a predetermined period of time, the system controller 3 stops the corresponding variable rotational speed compressor, while starting operation of other variable rotational speed compressors that are being stopped, thereby shortening the cumulative drive time for the variable rotational speed compressors 130a to 130e. To perform control in this manner, the system controller 3 monitors and records the cumulative drive time for the variable rotational speed compressors 130a to 130e, time (T1) for which the variable rotational speed compressors 130a to 130e have operated at a power consumption rate equal to or below the lower limit LL, and time (T2) for which the variable rotational speed compressors 130a to 130e have operated at or over the high-load operation value UL.

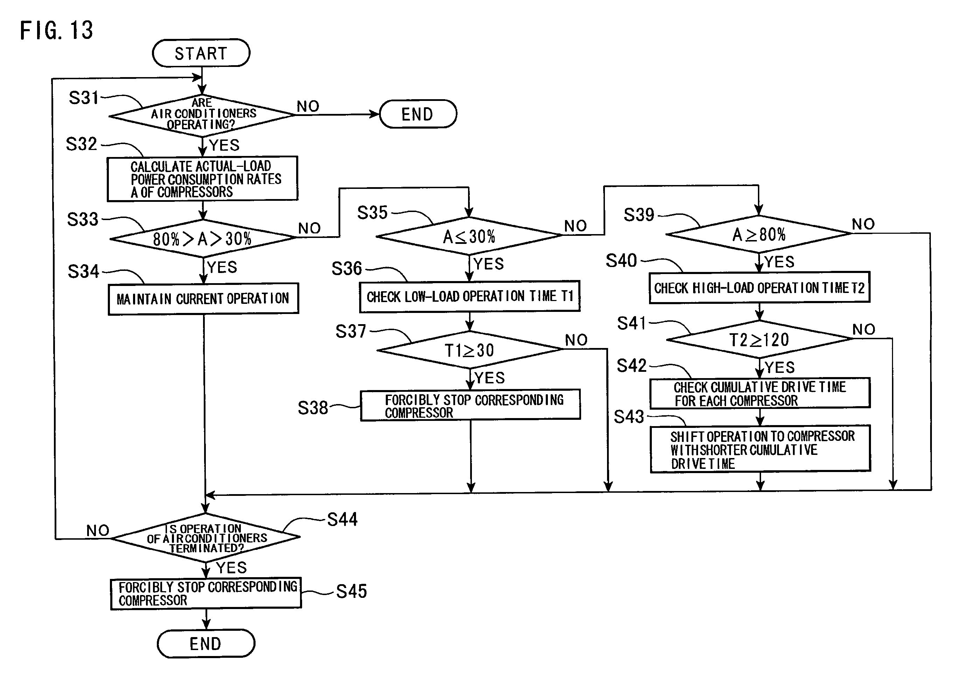

Specific control operation for the variable rotational speed compressors 130a to 130e performed by the system controller 3 will now be described. Fig. 13 is a flowchart of operational control for the variable rotational speed compressors 130a to 130e performed by the system controller 3. Figs. 14 to 17 are charts illustrating examples of operational states of the variable rotational speed compressors 130a to 130e.

The system controller 3 starts the procedure by, as illustrated in Fig. 13, determining whether each of the air conditioners 22a' and 22b' is operating (step S31). If each of the air conditioners 22a' and 22b' is operating, the system controller 3 calculates the actual-load power consumption rate A of each of the variable rotational speed compressors 130a to 130e (step S32). The actual-load power consumption rate A of each of the variable rotational speed compressors 130a to 130e is a power consumption rate of each compressor detected by the system controller 3 with respect to rated-operation power when each compressor operates with a 100% operational load.

The system controller 3 then determines whether the actual-load power consumption rate A of each of the variable rotational speed compressors 130a to 130e is below the high-load operation value UL and exceeds the lower limit LL (below 80% and over 30%), both of which are stored in the system controller 3 (step S33). If all the variable rotational speed compressors 130a to 130e operate at an actual-load power consumption rate A below 80% and over 30% (step S33: Yes), the current operational states of the variable rotational speed compressors 130a to 130e are maintained (step S34), and the procedure proceeds to step S44.

In the example illustrated in Fig. 14, all the variable rotational speed compressors 130a to 130e operate at an actual-load power consumption rate A below 80% and over 30%. In this case, their operation is maintained because their operational efficiency is not excessively low and load is not excessively high.

If it is determined that any of the variable rotational speed compressors 130a to 130e operates at an actual-load power consumption rate A falling out of the range below 80% and over 30% (step S33: No), the system controller 3 determines whether any of the variable rotational speed compressors 130a to 130e operates at an actual-load power consumption rate A equal to or below the lower limit LL (step S35).

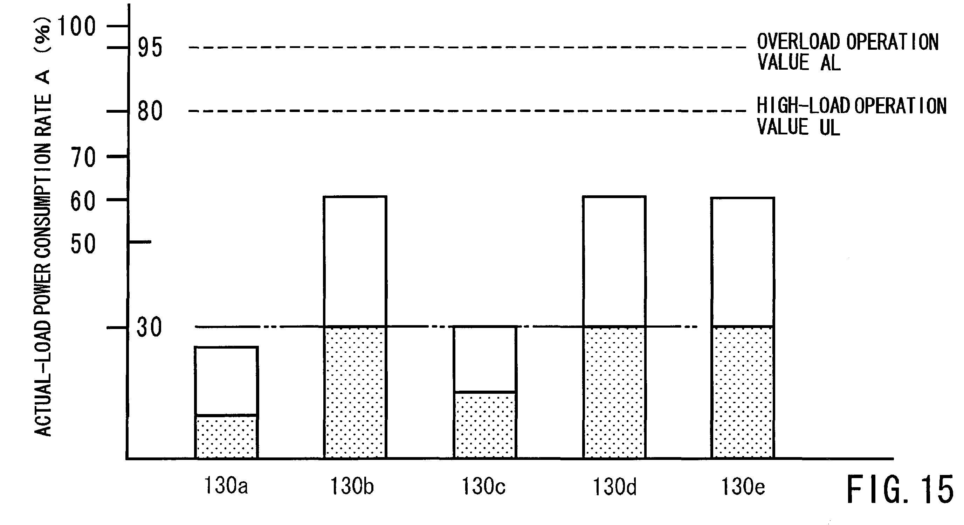

In the example illustrated in Fig. 15, the variable rotational speed compressor 130a operates at an actual-load power consumption rate A of 25% and the variable rotational speed compressor 130c operates at an actual-load power consumption rate A of 30%. The variable rotational speed compressors 130a and 130c operate at levels equal to or below the lower limit LL of power consumption and thus their operational efficiency is low. If any of the variable rotational speed compressors operates at an actual-load power consumption rate A equal to or below the lower limit LL as described above (step S35: Yes), the system controller 3 checks the time T1 that has elapsed since the corresponding variable rotational speed compressor started operation at low load equal to or below the lower limit LL (step S36) and determines whether the low-load operation time T1 has reached 30 minutes or over, for example (step S37).

If the low-load operation time T1 has reached 30 minutes or over (step S37: Yes), the system controller 3 forcibly stops the corresponding compressor (step S38). In this process, while stopping the corresponding variable rotational speed compressor, the system controller 3 continues the rotation of the interior fans 28a to 28e in the interior units 22A1, 22A2, 22B1 to 22B3, respectively, in the air conditioners 22a' and 22b' having the variable rotational speed compressor that is being stopped.

In the example illustrated in Fig. 15, while stopping the variable rotational speed compressors 130a and 130c, the system controller 3 continues the rotation of the interior fans 28a and 28c included in the interior units 22A1 and 22B1 connected to the variable rotational speed compressors 130a and 130c via a refrigerant pipe.

As the variable rotational speed compressors 130a and 130c are stopped, the interior units 22A1 and 22B1 connected to the variable rotational speed compressors 130a and 130c do not provide temperature adjustment of the air in the air-conditioned space. As a consequence, the temperature of the air in the air-conditioned space 200 circulated by the interior fans 28a to 28e changes, resulting in a change in the temperature of the air suctioned by the interior units 22A2, 22B2, and 22B3 corresponding to the exterior units 22a2, 22b2, and 22b3, respectively, having the other variable rotational speed compressors 130b, 130d, and 130e that are operating. This increases the operational load of the exterior units 22a2, 22b2, and 22b3 having the variable rotational speed compressors that are not stopped, thereby increasing the power consumption rates of the exterior units 22a2, 22b2, and 22b3, and thus air conditioning for the air-conditioned space 200 is maintained. In this manner, load imposed on the variable rotational speed compressors 130b, 130d, and 130e is adjusted without comprehensively controlling the exterior units 22a2, 22b2, and 22b3.

Furthermore, the system controller 3 continues the rotation of the interior fans 28a and 28c included in the interior units 22A1 and 22B1 connected to the variable rotational speed compressors 130a and 130c that are being stopped via the refrigerant pipe, resulting in no decrease in the amount of air circulating in the air-conditioned space 200. Therefore, uneven temperature distribution in the air-conditioned space 200 can be mitigated even if the number of operating compressors among the variable rotational speed compressors 130a to 130e decreases. If the low-load operation time T1 has yet to reach 30 minutes, for example (step S37: No), the system controller 3 continues monitoring the variable rotational speed compressors 130a to 130e, and the procedure proceeds to step S44.

If none of the variable rotational speed compressors 130a to 130e operates at an actual-load power consumption rate A equal to or below the lower limit LL (step S35: No), the system controller 3 determines whether any of the variable rotational speed compressors 130a to 130e operates at an actual-load power consumption rate A equal to or exceeding the high-load operation value UL (step S39). If none of the variable rotational speed compressors 130a to 130e operates at an actual-load power consumption rate A equal to or exceeding the high-load operation value UL (step S39: No), the system controller 3 continues monitoring the variable rotational speed compressors 130a to 130e, and the procedure proceeds to step S44.

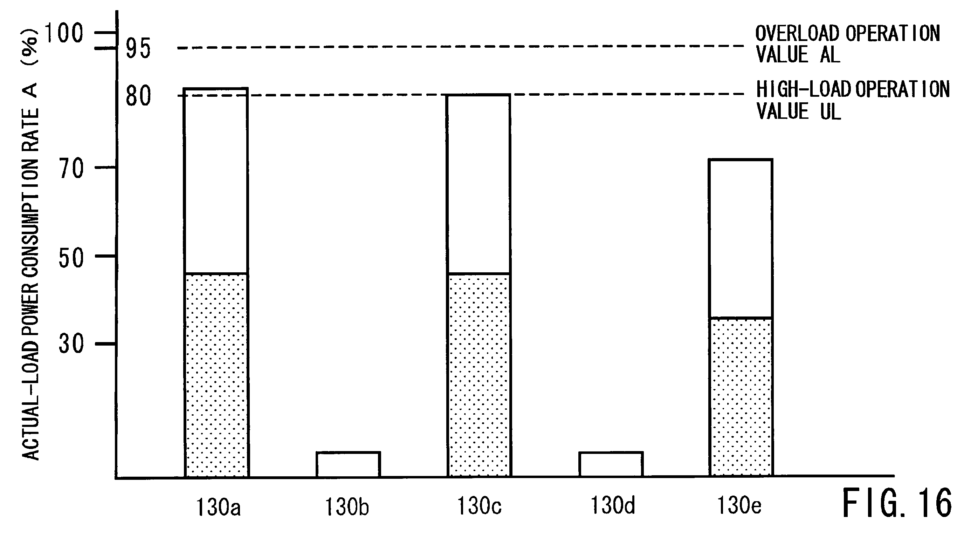

In the example illustrated in Fig. 16, the variable rotational speed compressor 130a operates at an actual-load power consumption rate A of 85% and the variable rotational speed compressor 130c operates at an actual-load power consumption rate A of 80%. In this case, the variable rotational speed compressors 130a and 130c operate at levels equal to or exceeding the high-load operation value UL of power consumption.

As illustrated in Fig. 16, if any of the variable rotational speed compressors 130a to 130e operates at an actual-load power consumption rate A equal to or exceeding the high-load operation value UL (step S39: Yes), the system controller 3 checks the high-load operation time T2 of the corresponding compressor (step S40). Subsequently, the system controller 3 determines whether the high-load operation time T2 has reached 120 minutes or over (step S41). If the high-load operation time T2 has reached 120 minutes or over, for example, the system controller 3 checks the cumulative drive time for the variable rotational speed compressors 130a to 130e (step S42).

The system controller 3 forcibly stops the variable rotational speed compressors 130a and 130c whose high-load operation time T2 has reached 120 minutes or over and also selectively starts a compressor with a shorter cumulative drive time between the variable rotational speed compressors 130b and 130d that have been stopped to shift operation (step S43). In this process, the system controller 3 continues the rotation of the interior fans included in the interior units connected to the compressors that are being stopped via the refrigerant pipe. If the high-load operation time T2 has yet to reach 120 minutes, the system controller 3 continues monitoring the high-load operation time T2 of the variable rotational speed compressors, and the procedure proceeds to step S44. After the system controller 3 shifts operation in step S43, the procedure proceeds to step S44.

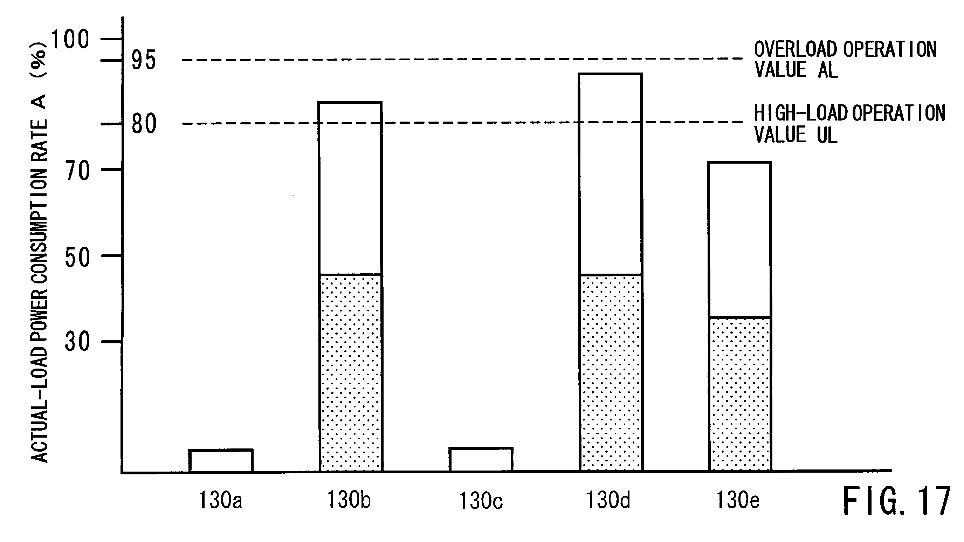

In the example illustrated in Fig. 16, if the high-load operation time T2 of the variable rotational speed compressors 130a and 130c has reached 120 minutes or over, the system controller 3 shifts operation. The system controller 3 selectively starts a compressor with a shorter cumulative drive time between the variable rotational speed compressors 130b and 130d that have been stopped as illustrated in Fig. 17 and forcibly stops the variable rotational speed compressors 130a and 130c.

In step S44, the system controller 3 determines whether the operational termination of each of the air conditioners 22a' and 22b' is being indicated (step S44). If the operation of each of the air conditioners 22a' and 22b' is to be terminated, all the exterior units 22a1, 22a2, 22b1 to 22b3 including all the variable rotational speed compressors are stopped (step S45), whereby the procedure is completed. The procedure returns to step S31 if each of the air conditioners 22a' and 22b' is not to be stopped.

In this configuration, by stopping the variable rotational speed compressor(s) operating with low operational efficiency, namely, at an actual-load power consumption rate A equal to or below the lower limit LL, and concentrating the operational load in the other variable rotational speed compressors, these variable rotational speed compressors can operate with good energy efficiency. Therefore, energy efficiency of the air conditioning system 100 can be enhanced.

If any of the variable rotational speed compressors operates at an actual-load power consumption rate A exceeding the high-load operation value UL for or over a predetermined period of time, by stopping the corresponding variable rotational speed compressors 130a to 130e and starting a variable rotational speed compressor with a shorter cumulative drive time among the variable rotational speed compressors that have been stopped to shift operation, the operation time of the individual variable rotational speed compressors 130a to 130e is averaged and uneven operation of the variable rotational speed compressors 130a to 130e can be prevented.

Moreover, while stopping any of the variable rotational speed compressors 130a to 130e, the system controller 3 continues the rotation of the interior fans 28a to 28e in the interior units 22A1, 22A2, 22B1 to 22B3 connected to the exterior units 22a1, 22a2, 22b1 to 22b3 having the variable rotational speed compressor that is being stopped via the refrigerant pipe. Therefore, the amount of air circulating in the air-conditioned space 200 does not decrease, whereby uneven temperature distribution in the air-conditioned space 200 is prevented. Consequently, energy efficiency can be enhanced by stopping one or more of the variable rotational speed compressors 130a to 130e and efficient air conditioning can be provided in the air-conditioned space 200.

As described above, the air conditioning system 100 according to the third embodiment is configured such that if the actual-load power consumption rate A of any of the variable rotational speed compressors 130a to 130e is below the lower limit LL (e.g., 30%), the system controller 3 stops the corresponding variable rotational speed compressor while continuing the rotation of the interior fans 28a to 28e included in the interior units 22A1, 22A2, 22B1 to 22B3 connected to the corresponding variable rotational speed compressor. In this manner, any variable rotational speed compressor operating with poor energy efficiency in a low-load state is stopped, and the entire operational efficiency of the air conditioning system 100 can be enhanced.

The rotation of the interior fans 28a to 28e is maintained even if any of the variable rotational speed compressors 130a to 130e is stopped. Therefore, conditioned air supplied from the interior units 22A1, 22A2, 22B1 to 22B3 connected to the operating variable rotational speed compressors circulates in the air-conditioned space 200 by the interior fans 28a to 28e, whereby uneven temperature distribution in the air-conditioned space 200 is prevented and efficient air conditioning in the air-conditioned space 200 is provided. At the same time, stopping the variable rotational speed compressor operating in a low-load state can shorten the cumulative drive time for the variable rotational speed compressors 130a to 130e and thus enhance the durability of the variable rotational speed compressors 130a to 130e.

In the air conditioning system 100 according to the third embodiment, the system controller 3 monitors the operational states of the variable rotational speed compressors 130a to 130e, e.g., low-load operation or high-load operation. Accordingly, the system controller 3 controls forcible stop or start of operation of the variable rotational speed compressors 130a to 130e, thereby enhancing the operational efficiency of the variable rotational speed compressors 130a to 130e and enhancing the operational efficiency of the air conditioning system 100 as a result.

In the air conditioning system 100 according to the third embodiment, if the actual-load power consumption rate A of any of the variable rotational speed compressors 130a to 130e in the exterior units 22a1, 22a2, 22b1 to 22b3, respectively, is below the lower limit LL, e.g., 30%, over a predetermined period of time, e.g., 30 minutes, the system controller 3 stops the corresponding variable rotational speed compressors 130a to 130e while continuing the rotation of the interior fans 28a to 28e included in the interior units 22A1, 22A2, 22B1 to 22B3 connected to the corresponding variable rotational speed compressors 130a to 130e via a refrigerant supply pipe. Accordingly, the variable rotational speed compressors 130a to 130e operating in a low-load state with poor operational efficiency for or over a predetermined period of time are stopped, and thus the energy efficiency of the air conditioning system 100 can be enhanced.

In this process, the air in the air-conditioned space 200 circulates because the interior fans 28a to 28e continue rotating. Therefore, the load imposed on the operating variable rotational speed compressors 130a to 130e increases in conjunction with changes in the temperature of the air suctioned by the interior units 22A1, 22A2, 22B1 to 22B3 connected to the corresponding variable rotational speed compressors 130a to 130e. Consequently, the operating variable rotational speed compressors 130a to 130e can operate at a power consumption rate near the high-load operation value UL, thereby providing optimal operational efficiency.

According to the third embodiment, if the actual-load power consumption rate A of any of the variable rotational speed compressors 130a to 130e in the exterior units 22a1, 22a2, 22b1 to 22b3, respectively, in the air conditioners 22a' and 22b' exceeds the high-load operation value UL, e.g., 80%, for or over 120 minutes, for example, the system controller 3 stops the corresponding rotational speed compressor and starts the other variable rotational speed compressors that have been stopped while continuing the rotation of the interior fans 28a to 28e included in the interior units 22A1, 22A2, 22B1 to 22B3 connected to the corresponding variable rotational speed compressor via the refrigerant supply pipe. Accordingly, any specific variable rotational speed compressors 130a to 130e does not operate in a high-load state for a long period of time, which enhances the durability of the individual compressors.

According to the third embodiment, the system controller 3 selectively starts a variable rotational speed compressor with a shorter cumulative drive time among the other variable rotational speed compressors 130a to 130e that have been stopped. Accordingly, the operation time of the individual variable rotational speed compressors 130a to 130e can be averaged and uneven operation of any specific variable rotational speed compressors 130a to 130e can be prevented. As a result, the durability of the individual variable rotational speed compressors 130a to 130e can be enhanced.

While the photovoltaic power generating unit 12 operates in a period from 07:00 in the morning to 17:59 in the evening in the third embodiment, the invention is not limited thereto. The photovoltaic power generating unit 12 may continue operating during hours in which a solar radiation sensor provided to the system controller 3 detects solar radiation. Alternatively, the magnetic switch 17a may be closed for power supply if the amount of power generated by the photovoltaic power generating unit 12 exceeds a threshold. Furthermore, while discharging of the battery 18 ends at 16:00 on days without solar radiation in the present embodiment, the invention is not limited thereto. Discharging of the battery 18 may be continued as long as the battery 18 has a charge.

While the variable rotational speed compressors operating at an actual-load power consumption rate A equal to or below the lower limit LL or equal to or exceeding the high-load operation value UL for or over a predetermined period of time are stopped in the third embodiment, the invention is not limited thereto. If the cumulative drive time for any of the variable rotational speed compressors becomes longer by a predetermined period of time than that of the other variable rotational speed compressors, the system controller 3 may stop the corresponding compressor and shift operation to the other variable rotational speed compressors. Other detailed configurations can be freely changed.

## Claims

1. An air conditioning system comprising:
a refrigerating cycle using a compressor, condenser, decompressor, and evaporator;
a generator driven by a driving source driving the compressor;
wiring to which commercial power is supplied from a commercial power system connected thereto;
a battery;
a charger controlling charging of the battery;
a first output circuit converting direct-current power of the battery into alternating-current power and superimposing the resultant power on the wiring;
a circuit conducting power generated by the generator to the charger;
a second output circuit converting direct-current power sourced from the power generated by the generator into alternating-current power and superimposing the resultant power on the wiring;
a direct-current power generating unit outputting direct-current power;
a third output circuit converting direct-current power of the direct-current power generating unit into alternating-current power and superimposing the resultant power on the wiring;
a circuit conducting output of the direct-current power generating unit to the charger;
a load supplied with power via the wiring;
a detector detecting the power supplied to the load; and
a controller;
the controller enabling the circuits conducting the power generated by the generator and the output of the direct-current power generating unit to the charger and the first output circuit converting the direct-current power of the battery into alternating-current power and superimposing the resultant power on the wiring if the power detected by the detector is equal to or smaller than the sum of the power generated by the generator and the output of the direct-current power generating unit, and
the controller enabling the second output circuit converting the direct-current power sourced from the power generated by the generator into alternating-current power and superimposing the resultant power on the wiring and the third output circuit converting the direct-current power of the direct-current power generating unit into alternating-current power and superimposing the resultant power on the wiring if the power detected by the detector exceeds the sum of the power generated by the generator and the output of the direct-current power generating unit.

2. The air conditioning system according to claim 1, wherein the controller enables the first output circuit converting the direct-current power of the battery into alternating-current power and superimposing the resultant power on the wiring if the power detected by the detector exceeds the sum of the power generated by the generator and the output of the direct-current power generating unit and remaining capacity of the battery is equal to or exceeds a certain value.

3. The air conditioning system according to claim 1, further comprising:
a circuit conducting the power supplied from the commercial power system to the charger, wherein
the controller enables the circuit conducting the power supplied from the commercial power system to the charger during night-time hours.

4. The air conditioning system according to claim 1, wherein the driving source is a gas engine.

5. The air conditioning system according to claim 1, wherein the battery is charged up to about 95% of a full charge thereof.

6. The air conditioning system according to claim 1, wherein the controller determines the ratio of the power supplied from the battery with respect to power consumed by the load before and after peak operation hours of the load and controls the power supplied from the battery based on the ratio thus determined.

7. The air conditioning system according to claim 6, wherein the controller determines ratio of the power supplied from the battery to the power consumed by the load before and after the peak operation period of the load based on remaining capacity of the battery.

8. The air conditioning system according to claim 6 or 7, wherein the controller determines a ratios of the power generated by the generator, the power generated by the direct-current power generating unit, and the power supplied from the battery to the power consumed by the load and controls the power supplied from the battery based on the ratio thus determined and an amount of the power generated by the generator and the direct-current power generating unit.

9. The air conditioning system according to claim 8, wherein the controller predicts the power generated by the generator, the power generated by the direct-current power generating unit, and the power consumed by the load and determines the ratios of the power generated by the generator, the power generated by the direct-current power generating unit, and the power supplied from the battery to the power consumed by the load based on the prediction.

10. The air conditioning system according to claim 9, wherein the controller predicts the power generated by the generator, the power generated by the direct-current power generating unit, and the power consumed by the load based on the history of power generated by the generator, the history of power generated by the direct-current power generating unit, and the history of power consumed by the load.

11. The air conditioning system according to claim 10, wherein the controller predicts the power generated by the generator, the power generated by the direct-current power generating unit, and the power consumed by the load based on the history of weather information.

12. An air conditioning system comprising:
a refrigerating cycle using a compressor, condenser, decompressor, and evaporator;
a generator driven by a driving source driving the compressor;
wiring to which commercial power is supplied from a commercial power system connected thereto;
a battery;
a charger controlling charging of the battery;
a first output circuit converting direct-current power of the battery into alternating-current power and superimposing the resultant power on the wiring;
a circuit conducting power generated by the generator to the charger;
a second output circuit converting direct-current power sourced from the power generated by the generator into alternating-current power and superimposing the resultant power on the wiring;
a direct-current power generating unit outputting direct-current power;
a third output circuit converting direct-current power of the direct-current power generating unit into alternating-current power and superimposing the resultant power on the wiring;
a circuit conducting output of the direct-current power generating unit to the charger;
a load supplied with power via the wiring;
a detector detecting the power supplied to the load; and
a controller;
the load including a plurality of air conditioners each implemented by a refrigerating cycle including a compressor driven by alternating-current power supplied via the wiring, condenser, decompressor, and evaporator,
the controller enabling the circuits conducting the power generated by the generator and the output of the direct-current power generating unit to the charger and a circuit conducting the power of the battery to the first output circuit if the power detected by the detector is equal to or smaller than the sum of the power generated by the generator and the output of the direct-current power generating unit,
the controller enabling a circuit conducting the power generated by the generator to the second output circuit and a circuit conducting the output of the direct-current power generating unit to the third output circuit if the power detected by the detector exceeds the sum of the power generated by the generator and the output of the direct-current power generating unit, and
if power consumed by the compressor included in any of the air conditioners is smaller than a certain value, the controller stopping operation of the compressor in the air conditioner, while maintaining operation of a fan blowing air to an air-conditioned chamber arranged in the corresponding refrigerating cycle of the air conditioner.

13. The air conditioning system according to claim 12, wherein if a state in which power consumed by the compressor included in any of the air conditioners is smaller than the certain value continues for more than a certain period, the controller stops operation of the compressor in the corresponding air conditioner.

14. The air conditioning system according to claim 12, wherein the load includes the plurality of air conditioners, and fans blowing air to the air-conditioned chamber arranged in the refrigerating cycle of each of the air conditioners are disposed in such single air-conditioned chamber, and
if power consumed by the compressor included in any of the air conditioners is smaller than the certain value, the controller stops operation of the compressor in the air conditioner whose power consumption is smaller than the certain value, while maintaining operation of the fans arranged in the refrigerating cycle of the corresponding air conditioner.

15. The air conditioning system according to claim 14, wherein if a state in which power consumed by the compressor included in any of the air conditioners is smaller than the certain value continues for more than a certain period, the controller stops operation of the compressor in the corresponding air conditioner.

16. The air conditioning system according to claim 14, wherein if a state in which power consumed by the compressor included in any of the air conditioners exceeds a high load operation value continues, the controller stops operation of the compressor in the corresponding air conditioner, while maintaining operation of all the fans arranged in the refrigerating cycle of the corresponding air conditioner, and starts the compressors included in other air conditioners whose operation has been stopped.

17. The air conditioning system according to any one of claims 14 to 16, wherein the controller selects and starts a compressor whose cumulative drive time is short among the compressors included in the air conditioners whose operation has been stopped.

18. The air conditioning system according to claim 13, wherein the controller stops operation of part of the compressors included in the plurality of air conditioners, while maintaining operation of all the fans, if the circuit leading the power generated by the generator to the second output circuit and the circuit leading the output of the direct-current power generating unit to the third output circuit are enabled and the power consumed by the load exceeds a set value, and the controller changes which compressor to stop if a state in which the power consumed by the load exceeds the set value still continues.
